# EUROPEAN PATENT APPLICATION

(11) **EP 4 171 122 A1**
(43) Date of publication of application: **26.04.2023**
(21) Application number: 21832950.6
(22) Date of filing: 25.05.2021
(51) Int. Cl.: H04W 36/00, H04W 76/19

(54) **METHOD FOR IAB NETWORK COMMUNICATION, AND RELATED DEVICE**

(30) Priority: 30.06.2020 CN 202010624351
(71) Applicant: Huawei Technologies Co., Ltd., Longgang District, Shenzhen, Guangdong 518129 (CN)
(72) Inventor: ZHUO, Yibin, Shenzhen, Guangdong 518129 (CN); ZHU, Yuanping, Shenzhen, Guangdong 518129 (CN); SHI, Yulong, Shenzhen, Guangdong 518129 (CN); LIU, Jing, Shenzhen, Guangdong 518129 (CN)
(74) Representative: Pfenning, Meinig & Partner mbB
(86) International application number: PCT/CN2021/095773
(87) International publication number: WO 2022/001503

(57) **Abstract**

Embodiments of this application provide an integrated access and backhaul (integrated access and backhaul, IAB) network communication method and a related device. The method includes: A source IAB donor of an IAB node sends, to a target IAB donor of the IAB node, request information for setting up a first F1 interface, where the first F1 interface is a communication interface between a distributed unit of the IAB node and a central unit of the target IAB donor. Then, the target IAB donor sends feedback information of the request information to the source IAB donor. The source IAB donor exchanges, with the target IAB donor, related information for setting up the first F1 interface, so that the distributed unit (distributed unit, DU) of the IAB node can obtain configuration information of the DU on the target IAB donor more quickly, thereby implementing efficient migration.

## Description

This application claims priority to Chinese Patent Application No. 202010624351.5, filed with the China National Intellectual Property Administration on June 30, 2020 and entitled "IAB NETWORK COMMUNICATION METHOD AND RELATED DEVICE", which is incorporated herein by reference in its entirety.

### TECHNICAL FIELD

This application relates to the field of communication technologies, and more specifically, to an IAB network communication method and a related device.

### BACKGROUND

Concepts of a central unit (Central Unit, CU) and a distributed unit (Distributed Unit, DU) are introduced in 5th generation communication (fifth generation, 5G). A base station, for example, a next generation NodeB (generation NodeB, gNB), may be divided, based on protocol layers, into a gNB-CU and at least one gNB-DU connected to the gNB-CU. The gNB-DU may include a radio link control (Radio Link Control, RLC) layer function, a MAC layer function, and a physical (Physical, PHY) layer function. The CU may include a packet data convergence protocol (Packet Data Convergence Protocol, PDCP) layer function, a service data adaptation protocol (Service Data Adaptation Protocol, SDAP) layer function, and a radio resource control (Radio Resource Control, RRC) layer function. Because the gNB-CU and the gNB-DU are wiredly connected and communicate with each other through an F1 interface, a conventional technology does not involve gNB-DU migration.

After an integrated access and backhaul (Integrated access and backhaul, IAB) network and an IAB node are introduced in 5G, because a DU of the IAB node is wirelessly connected to a CU of an IAB donor, the IAB node may choose to be connected to different IAB donors or to migrate between different IAB donors.

However, the conventional technology does not provide a solution to how an IAB node is efficiently connected to different IAB donors or efficiently migrates between different IAB donors.

### SUMMARY

In view of this, this application provides a communication method and a related device, so that an IAB node is efficiently connected to different IAB donors or efficiently migrates between different IAB donors.

According to a first aspect, this application provides a communication method. The method may include: A source IAB donor of an IAB node sends first information to a target IAB donor of the IAB node, where the first information includes request information for setting up a first F1 interface. After receiving the first information, the target IAB donor sends second information to the source IAB donor, where the second information includes feedback information of the request information. The first F1 interface is a communication interface between a DU of the IAB node and a CU of the target IAB donor. According to this method, examples of beneficial effects include: The source IAB donor exchanges, with the target IAB donor, related information for setting up the first F1 interface, so that the DU of the IAB node can obtain configuration information of the DU on the target IAB donor more quickly, thereby implementing efficient migration. In addition, the target IAB donor may flexibly indicate, based on the feedback information, a status of setting up the first F1 interface, thereby improving efficiency of setting up the first F1 interface.

In a feasible design of the first aspect, the feedback information sent by the source IAB donor to the target IAB donor is response information for setting up the first F1 interface. After receiving the response information, the source IAB donor sends third information to the IAB node, where the third information includes the response information. According to this method, examples of beneficial effects include: The source IAB donor may determine, based on the received response information for setting up the first F1 interface, that the target IAB donor agrees to set up the first F1 interface. Further, the source IAB donor notifies the IAB node of the response information for setting up the first F1 interface, so that the IAB node quickly sets up the first F1 interface.

In a feasible design of the first aspect, the feedback information sent by the source IAB donor to the target IAB donor is indication information indicating that setup of the first F1 interface fails. According to this method, examples of beneficial effects include: The source IAB donor may determine, based on the received indication information indicating that setup of the first F1 interface fails, that the target IAB donor refuses to or cannot set up the first F1 interface. Further, the source IAB donor may determine whether to continue to send the first information to the target IAB donor, to attempt to set up the first F1 interface, thereby improving a success rate of setting up the first F1 interface.

In a feasible design of the first aspect, the request information for setting up the first F1 interface includes at least one of the following: a DU identifier of the IAB node, a DU name of the IAB node, served cell information of a cell served by the IAB node, system information sent by the DU of the IAB node, a radio resource control (radio resource control, RRC) version supported by the DU of the IAB node, and transport layer address information of the DU of the IAB node. According to this method, examples of beneficial effects include: The related information for setting up the first F1 interface may be carried to request, through implicit indication, the target IAB donor to set up the first F1 interface, and provide the target IAB donor with information required for setting up the first F1 interface.

In a feasible design of the first aspect, the response information for setting up the first F1 interface includes at least one of the following: information for identifying the target IAB donor, activation information of the cell served by the IAB node, an RRC version supported by the CU of the target IAB donor, transport layer address information of the CU of the target IAB donor, and a synchronization signal block transmission configuration (synchronization signal block transmission configuration, STC) of the DU of the IAB node. The information for identifying the target IAB donor may include any one of the following: an identifier or a name of the target IAB donor, a CU identifier or name of the target IAB donor, or a base station identifier or name of the target IAB donor. According to this method, examples of beneficial effects include: The target IAB donor may implicitly indicate, to the source IAB donor based on the response information that carries the related information for setting up the first F1 interface, that the target IAB donor agrees to set up the first F1 interface, and provide, through the source IAB donor, the IAB node with the information required for setting up the first F1 interface. In addition, the information for identifying the target IAB donor may be used as explicit indication information to indicate, to the IAB node, that the response information corresponds to the target IAB donor, so that the IAB node can determine whether the received information is information for setting up the first F1 interface or information for updating a configuration of a second F1 interface. The second F1 interface is a communication interface between the DU of the IAB node and a CU of the source IAB donor.

In a feasible design of the first aspect, the first information is carried in a handover request message that is for the IAB node and that is sent by the source IAB donor to the target IAB donor. According to this method, examples of beneficial effects include: The first information is carried in an existing message, so that signaling overheads can be reduced.

In a feasible design of the first aspect, the second information is carried in a handover request response message that is for the IAB node and that is sent by the target IAB donor to the source IAB donor. According to this method, examples of beneficial effects include: The second information is carried in an existing message, so that signaling overheads can be reduced.

In a feasible design of the first aspect, the third information is carried in an RRC reconfiguration message sent by the source IAB donor to the IAB node. According to this method, examples of beneficial effects include: The third information is carried in an existing message, so that signaling overheads can be reduced.

In a feasible design of the first aspect, the third information is carried in an F1 application protocol (F1 application protocol, F1AP) message, on the second F1 interface, sent by the source IAB donor to the IAB node, where the second F1 interface is a communication interface between the DU of the IAB node and the CU of the source IAB donor. According to this method, examples of beneficial effects include: The target IAB donor may send the second information to the IAB node through the source IAB donor in a form of an encapsulated F1AP container (container) information element, to prevent the source IAB donor from parsing the second information, thereby improving transmission security of the second information. In addition, a change to an existing RRC reconfiguration message can be avoided.

In a feasible design of the first aspect, when the third information is carried in the F1AP message on the second F1 interface, the F1AP message on the second F1 interface further includes indication information, where the indication information indicates that the third information corresponds to the target IAB donor. According to this method, examples of beneficial effects include: The IAB node may determine, based on the indication information, whether the information carried in the F1AP message on the second F1 interface is the information for setting up the first F1 interface or the information for updating the configuration of the second F1 interface.

In a feasible design of the first aspect, the source IAB donor receives fourth information from the target IAB donor, where the fourth information includes IP address information of the target IAB donor, and the IP address information is for establishing an initial stream control transmission protocol (stream control transmission protocol, SCTP) association (association) between the target IAB donor and the IAB node; and after receiving the IP address information, the source IAB donor sends fifth information to the IAB node, where the fifth information includes the IP address information. According to this method, examples of beneficial effects include: The target IAB donor sends the IP address information of the target IAB donor to the IAB node, so that the IAB node can quickly establish the SCTP association with the target IAB donor based on the IP address information. This further improves a success rate of establishing the SCTP association between the target IAB donor and the IAB node.

In a feasible design of the first aspect, the IP address information includes at least one of the following: an IP address, an IP address type, an IP address prefix, or a quantity of IP addresses of the target IAB donor for a first F1 interface, an IP address, an IP address type, an IP address prefix, or a quantity of IP addresses of the target IAB donor for a first F1-C interface or an F1-C service, and an IP address, an IP address type, an IP address prefix, or a quantity of IP addresses of the target IAB donor for a first F1-U interface or an F1-U service, where the first F1-C interface is a control plane interface of the first F1 interface, the first F1-U interface is a user plane interface of the first F1 interface, the F1-C service includes a service passing through the first F1-C interface, and the F1-U service includes a service passing through the first F1-U interface. According to this method, examples of beneficial effects include: The target IAB donor may select a type of IP address information based on a requirement, and then send the IP address information to the IAB node through the source IAB donor.

In a feasible design of the first aspect, the fourth information is carried in a handover request response message that is for the IAB node and that is sent by the target IAB donor to the source IAB donor. According to this method, examples of beneficial effects include: The second information is carried in an existing message, so that signaling overheads can be reduced.

In a feasible design of the first aspect, the fifth information is carried in an RRC reconfiguration message sent by the source IAB donor to the IAB node. According to this method, examples of beneficial effects include: The second information is carried in an existing message, so that signaling overheads can be reduced.

In a feasible design of the first aspect, the source IAB donor receives sixth information from the target IAB donor, where the sixth information includes request information for setting up a context of a subordinate device of the IAB node in the IAB node and/or the target IAB donor. After receiving the sixth information, the source IAB donor sends seventh information to the IAB node, where the seventh information includes the request information. Further, the source IAB donor receives, from the IAB node, response information for setting up the context of the subordinate device of the IAB node in the IAB node and/or the target IAB donor. The subordinate device of the IAB node includes a child IAB node of the IAB node or a terminal device accessing the IAB node. After receiving the response information, the source IAB donor sends the response information to the target IAB donor. According to this method, examples of beneficial effects include: The source IAB donor exchanges related information of the context of the subordinate device of the IAB node with the target IAB donor, so that the target IAB donor can obtain the context of the subordinate device of the IAB node more quickly, to implement efficient migration.

In a feasible design of the first aspect, the request information for setting up the context of the subordinate device of the IAB node in the IAB node and/or the target IAB donor includes at least one of the following: an F1 application protocol identifier corresponding to the subordinate device of the IAB node, a setup list of secondary cells (secondary cell, SCell) served by the IAB node, a setup list of signaling radio bearers (signaling radio bearer, SRB) between the IAB node and the subordinate device of the IAB node, a setup list of data radio bearers (data radio bearer, DRB) between the IAB node and the subordinate device of the IAB node, a setup list of backhaul radio link control channels (backhaul RLC channel, BH RLC CH) between the IAB node and the subordinate device of the IAB node, a user plane data routing rule of the IAB node, and a user plane bearer mapping rule of the IAB node. According to this method, examples of beneficial effects include: Based on a request message carrying the related information for setting up the context of the subordinate device of the IAB node in the IAB node and/or the target IAB donor, the target IAB donor may request, through implicit indication, the source IAB donor to set up the context of the subordinate device of the IAB node in the IAB node and/or the target IAB donor, and provide, through the source IAB donor, the IAB node with information required for setting up the context of the subordinate device of the IAB node in the IAB node and/or the target IAB donor.

In a feasible design of the first aspect, the response information for setting up the context of the subordinate device of the IAB node in the IAB node and/or the target IAB donor includes at least one of the following: a cell radio network temporary identifier (cell radio network temporary identifier, C-RNTI) allocated by the IAB node to the subordinate device of the IAB node, a list of DRBs between the IAB node and the subordinate device of the IAB node that are successfully or unsuccessfully set up, and a list of SRBs between the IAB node and the subordinate device of the IAB node that are successfully or unsuccessfully set up, a list of BH RLC CHs between the IAB node and the subordinate device of the IAB node that are successfully or unsuccessfully set up, and a list of SCells served by the IAB node that are successfully or unsuccessfully set up. According to this method, examples of beneficial effects include: The target donor node may obtain the related information, of the context of the subordinate device of the IAB node, set up in the IAB node and/or the target IAB donor, and set up the context of the subordinate device of the IAB node in advance in the IAB node and/or the target IAB donor.

In a feasible design of the first aspect, the seventh information is carried in an RRC reconfiguration message sent by the source IAB donor to the IAB node. According to this method, examples of beneficial effects include: The second information is carried in an existing message, so that signaling overheads can be reduced.

In a feasible design of the first aspect, the seventh information and the third information are carried in a same message. According to this method, examples of beneficial effects include: Signaling overheads can be reduced by combining the third information and the seventh information. In addition, data communication between the IAB node and the target IAB donor can be set up more quickly by sending the third information and the seventh information together, to improve communication efficiency of an IAB network.

In a feasible design of the first aspect, that the source IAB donor receives the sixth information from the target IAB donor is specifically that the source IAB donor receives the sixth information from the target IAB donor through a core network device. According to this method, examples of beneficial effects include: The source IAB donor and the target IAB donor can exchange the sixth information through the core network device, thereby ensuring setup of the context of the subordinate device of the IAB node between the IAB node and the target IAB donor.

In a feasible design of the first aspect, that the source IAB donor sends, to the target IAB donor, the response information for setting up the context of the subordinate device of the IAB node in the IAB node and/or the target IAB donor is specifically that the source IAB donor sends, to the target IAB donor through the core network device, the response information for setting up the context of the subordinate device of the IAB node in the IAB node and/or the target IAB donor. According to this method, examples of beneficial effects include: The source IAB donor and the target IAB donor can exchange the response information through the core network device, thereby ensuring setup of the context of the subordinate device of the IAB node between the IAB node and the target IAB donor.

In a feasible design of the first aspect, that the source IAB donor receives the fourth information from the target IAB donor is specifically that the source IAB donor receives the fourth information from the target IAB donor through the core network device. According to this method, examples of beneficial effects include: The source IAB donor and the target IAB donor can exchange the fourth information through the core network device, thereby ensuring fast establishment of the initial SCTP association between the IAB node and the target IAB donor.

In a feasible design of the first aspect, that the source IAB donor sends the first information to the target IAB donor of the IAB node is specifically that the source IAB donor sends the first information to the target IAB donor of the IAB node through the core network device. According to this method, examples of beneficial effects include: The source IAB donor and the target IAB donor may exchange the first information through the core network device, thereby ensuring setup of the first F1 interface.

In a feasible design of the first aspect, that the source IAB donor receives the second information from the target IAB donor is specifically that the source IAB donor receives the second information from the target IAB donor through the core network device. According to this method, examples of beneficial effects include: The source IAB donor and the target IAB donor may exchange the second information through the core network device, thereby ensuring that the IAB node can obtain the feedback information from the target IAB donor for the first information.

According to a second aspect, this application provides a communication method. The method may include: An IAB node receives IP address information of a target IAB donor from the target IAB donor. The IP address information is for establishing an initial SCTP association between the target IAB donor and the IAB node. According to this method, examples of beneficial effects include: The target IAB donor sends the IP address information of the target IAB donor to the IAB node, so that the IAB node can quickly establish the SCTP association with the target IAB donor based on the IP address information. This further improves a success rate of establishing the SCTP association between the target IAB donor and the IAB node.

In a feasible design of the second aspect, the IP address information includes at least one of the following: an IP address, an IP address type, an IP address prefix, or a quantity of IP addresses of the target IAB donor for a first F1 interface, an IP address, an IP address type, an IP address prefix, or a quantity of IP addresses of the target IAB donor for a first F1-C interface or an F1-C service, and an IP address, an IP address type, an IP address prefix, or a quantity of IP addresses of the target IAB donor for a first F1-U interface or an F1-U service, where the first F1 interface is a communication interface between a DU of the IAB node and a CU of the target IAB donor, the first F1-C interface is a control plane interface of the first F1 interface, the first F1-U interface is a user plane interface of the first F1 interface, the F1-C service includes a service passing through the first F1-C interface, and the F1-U service includes a service passing through the first F1-U interface. According to this method, examples of beneficial effects include: The target IAB donor may select a type of IP address information based on a requirement, and then send the IP address information to the IAB node through a source IAB donor.

In a feasible design of the second aspect, the IP address information of the target IAB donor is carried in a handover request response message that is for the IAB node and that is sent by the target IAB donor to the source IAB donor. According to this method, examples of beneficial effects include: The IP address information of the target IAB donor is carried in an existing message, so that signaling overheads can be reduced.

In a feasible design of the second aspect, the IP address information of the target IAB donor is carried in an RRC reconfiguration message sent by the source IAB donor to the IAB node. According to this method, examples of beneficial effects include: The IP address information of the target IAB donor is carried in an existing message, so that signaling overheads can be reduced.

In a feasible design of the second aspect, that the source IAB donor receives the IP address information of the target IAB donor from the target IAB donor is specifically that the source IAB donor receives the IP address information of the target IAB donor from the target IAB donor through a core network device. According to this method, examples of beneficial effects include: The source IAB donor and the target IAB donor may exchange the IP address information of the target IAB donor through the core network device, thereby ensuring fast establishment of the initial SCTP association between the IAB node and the target IAB donor.

According to a third aspect, this application provides a communication method. The method may include: A target IAB donor of an IAB node receives first information from a source IAB donor of the IAB node, where the first information includes request information for setting up a first F1 interface. The target IAB donor sends second information to the source IAB donor, where the second information includes feedback information of the request information. The first F1 interface is a communication interface between a distributed unit of the IAB node and a central unit of the target IAB donor.

In a feasible design of the third aspect, the target IAB donor sends IP address information of the first F1 interface to the IAB node through the source IAB donor, where the IP address information of the first F1 interface is for establishing an initial stream control transmission protocol association between the target IAB donor and the IAB node.

In a feasible design of the third aspect, the target IAB donor sends, to the IAB node through the source IAB donor, request information for setting up a context of a subordinate device of the IAB node in the IAB node and/or the target IAB donor. Subsequently, the target IAB donor receives, from the IAB node through the source IAB donor, response information for setting up the context of the subordinate device of the IAB node in the IAB node and/or the target IAB donor. The subordinate device of the IAB node includes a child IAB node of the IAB node or a terminal device accessing the IAB node.

In a feasible design of the third aspect, the target IAB donor establishes the initial SCTP association with the IAB node based on an IP address, where the IP address is an IP address included in the IP address information carried in the fourth information.

According to a fourth aspect, this application provides a communication method. The method may include: An IAB node receives third information from a source IAB donor, where the third information includes response information for setting up a first F1 interface. The first F1 interface is a communication interface between a distributed unit of the IAB node and a central unit of the target IAB donor.

In a feasible design of the fourth aspect, when the response information for setting up the first F1 interface is carried in an application protocol message, on a second F1 interface, sent by the source IAB donor to the IAB node, and the application protocol message on the second F 1 interface includes indication information, where the indication information indicates information included in the application protocol message on the second F1 interface is information corresponding to the target IAB donor or information for setting up the first F1 interface, the IAB node determines, based on the indication information, that the information included in the application protocol message on the second F1 interface is the information corresponding to the target IAB donor or the information for setting up the first F1 interface. The second F1 interface is a communication interface between the DU of the IAB node and a CU of the source IAB donor.

In a feasible design of the fourth aspect, the IAB node receives fifth information from the source IAB donor, where the fifth information includes IP address information of the first F1 interface, and the IP address information of the first F1 interface is for establishing an initial stream control transmission protocol association between the target IAB donor and the IAB node.

In a feasible design of the fourth aspect, the IAB node establishes the initial SCTP association with the target IAB donor based on an IP address, where the IP address is obtained based on the fifth information.

In a feasible design of the fourth aspect, the IAB node receives seventh information from the source IAB donor, where the seventh information includes request information for setting up a context of a subordinate device of the IAB node in the IAB node and/or the target IAB donor. Subsequently, the IAB node sends, to the target IAB donor through the source IAB donor, response information for setting up the context of the subordinate device of the IAB node in the IAB node and/or the target IAB donor. The subordinate device of the IAB node includes a child IAB node of the IAB node or a terminal device accessing the IAB node.

According to a fifth aspect, this application provides a communication apparatus. The apparatus includes a module configured to perform the method in any one of the first aspect to the fourth aspect and any design of thereof.

According to a sixth aspect, this application provides a communication apparatus, including a processor and a memory. The processor is coupled to the memory, and the processor is configured to implement the method in any one of the first aspect to the fourth aspect and the designs thereof.

According to a seventh aspect, this application provides a communication apparatus, including at least one processor and an interface circuit. The interface circuit is configured to: receive a signal from another communication apparatus outside the communication apparatus and transmit the signal to the processor; or send a signal from the processor to another communication apparatus outside the communication apparatus. The processor is configured to implement, by using a logic circuit or executing code instructions, the method in any one of the first aspect to the fourth aspect and the designs thereof.

In a possible design, the apparatus may be the IAB node, the source IAB donor, the target IAB donor, or the chip or the integrated circuit thereof in the method in any one of the first aspect to the fourth aspect and the designs thereof.

Optionally, the communication apparatus may further include at least one memory, and the memory stores related program instructions.

According to an eighth aspect, this application provides a communication apparatus. The apparatus has a function or an operation for implementing the method in any one of the first aspect to the fourth aspect and the designs thereof. The function or the operation may be implemented by hardware, or may be implemented by hardware executing corresponding software. The hardware or the software includes one or more units (modules) corresponding to the function or the operation, for example, a transceiver unit and a processing unit.

According to a ninth aspect, this application provides a computer- readable storage medium, where the computer-readable storage medium stores related program instructions. When the related program instructions are run, a communication apparatus is enabled to implement the method in any one of the first aspect to the fourth aspect and the designs thereof.

According to a tenth aspect, this application provides a computer program product. The computer program product includes related program instructions. When the related program instructions are executed, the method in any one of the first aspect to the fourth aspect and the designs thereof is implemented.

According to an eleventh aspect, this application further provides a chip, where the chip is configured to implement the method in any one of the first aspect to the fourth aspect and the designs thereof.

According to a twelfth aspect, this application provides a communication system, where the communication system includes at least one communication apparatus in any one of the fifth aspect to the eighth aspect and the designs thereof.

### BRIEF DESCRIPTION OF DRAWINGS

The accompanying drawings, which may be included in this specification and constitute a part of this specification, together with this specification show example embodiments, or features and aspects of this application, and are used to explain principles of this application. It is clear that the accompanying drawings in the following descriptions merely show some embodiments of this application, and a person of ordinary skill in the art can derive other drawings from these accompanying drawings without creative efforts.
FIG. 1A is a schematic diagram of a possible communication system according to this application;
FIG. 1B is a schematic diagram of an IAB donor according to an embodiment of this application;
FIG. 1C is a schematic diagram of a control plane protocol stack in an IAB network according to an embodiment of this application;
FIG. 1D is a schematic diagram of a user plane protocol stack in an IAB network according to an embodiment of this application;
FIG. 1E is a schematic diagram of IAB node migration according to an embodiment of this application;
FIG. 2 is a schematic diagram of a communication method according to an embodiment of this application;
FIG. 3 is a schematic diagram of a communication method according to an embodiment of this application;
FIG. 4 is a schematic diagram of a communication method according to an embodiment of this application;
FIG. 5 is a schematic block diagram of a communication apparatus according to an embodiment of this application;
FIG. 6 is a schematic block diagram of a communication apparatus according to an embodiment of this application; and
FIG. 7 is a schematic block diagram of an apparatus according to an embodiment of this application.

### DESCRIPTION OF EMBODIMENTS

Compared with a 4th generation mobile communication system, 5th generation (5G) mobile communication imposes stricter requirements on various network performance indicators in an all-round way. For example, a capacity indicator is increased by 1000 times, wider coverage is required, and ultra-high reliability and an ultra-low latency are required. In one aspect, in view of rich frequency resources on a high-frequency carrier, networking by using high-frequency small cells is increasingly popular in a hotspot area to meet an ultra-high capacity requirement of 5G. The high-frequency carrier has a poor propagation characteristic, is severely attenuated due to blocking, and has small coverage. Therefore, a large quantity of small cells need to be densely deployed. Correspondingly, it is quite costly to provide fiber backhaul for the large quantity of small cells that are densely deployed, and construction is difficult. Therefore, an economical and convenient backhaul solution is required. On the other hand, from a perspective of a wide coverage requirement, it is difficult and costly to deploy optical fibers to provide network coverage in some remote areas. Therefore, a flexible and convenient access and backhaul solution also needs to be designed. An integrated access and backhaul (Integrated access and backhaul, IAB) technology provides an idea to resolve the foregoing two problems: A wireless transmission solution is used for both an access link (Access Link) and a backhaul link (Backhaul Link), to avoid optical fiber deployment. In an IAB network, a relay node RN (RN, Relay Node) or an IAB node (IAB node) may provide a wireless access service for user equipment (UE, User equipment). Service data of the UE is transmitted by the IAB node through a wireless backhaul link to a connected donor node (IAB donor) or a donor base station (DgNB, Donor gNodeB). An antenna can be shared by using the IAB node for access and backhaul, thereby reducing a quantity of antennas of a base station.

The following describes embodiments of this application with reference to the accompanying drawings. Features or content marked by dashed lines in the accompanying drawings may be understood as optional operations or optional structures in embodiments of this application.

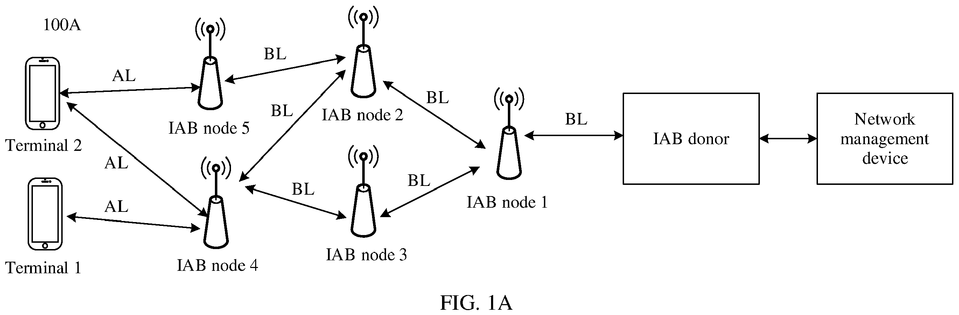

User equipment in FIG. 1A may be an access terminal device, a subscriber unit, a subscriber station, a mobile station, a remote station, a remote terminal device, a mobile device, a user terminal device, a wireless terminal device, a user agent, a user apparatus, or the like. The user equipment may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device (such as a smartwatch or a smart band), smart furniture or a home appliance, a terminal device in a 5G network, a terminal device in a future evolved public land mobile network (public land mobile network, PLMN), a vehicle device in vehicle-to-everything (vehicle-to-everything, V2X), a customer premises equipment (customer premises equipment, CPE), or the like. A specific implementation form of the user equipment is not limited in this application.

An IAB node in FIG. 1A may include a mobile termination (mobile termination, MT) and a distributed unit DU (distributed unit, DU). When facing a parent node of the IAB node, the IAB node may be considered as a terminal device, that is, the MT. When facing a subordinate device of the IAB node (where the subordinate device may be another child IAB node or common UE), the IAB node may be considered as a network device, that is, the DU.

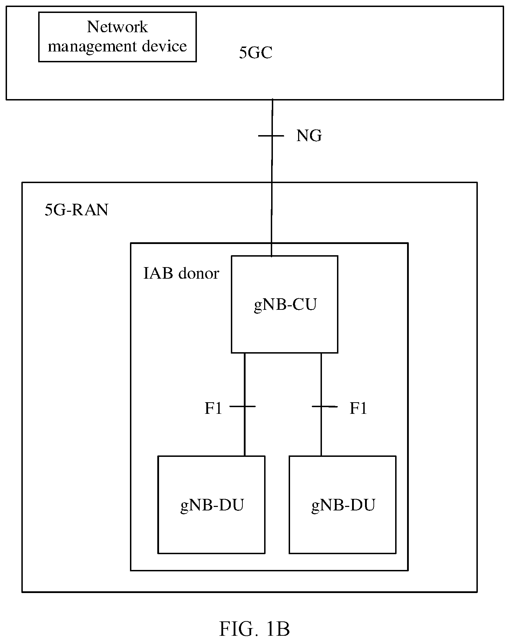

An IAB donor (IAB donor) in FIG. 1A may be used as a donor base station, and the IAB donor may be referred to as a DgNB (that is, a donor gNodeB) for short in a 5G network. The IAB donor may be a complete entity, or may exist in a form in which a central unit (central unit, CU) (Donor-CU or gNB-CU for short in this application) and a distributed unit (distributed unit, DU) (Donor-DU or gNB-DU for short in this application) are separated. As shown in FIG. 1B, the IAB donor may be a gNB in a 5G radio access network (5G radio access network, 5G RAN). The IAB donor may include a gNB-CU and a gNB-DU. The gNB-CU and the gNB-DU are connected through an F1 interface, and the F1 interface may further include a control plane interface (F1-C) and a user plane interface (F1-U). The CU and a core network are connected through a next-generation (next generation, NG) interface. The gNB-CU or the donor-CU may alternatively exist in a form in which a user plane (User plane, UP) (referred to as CU-UP in this application) and a control plane (Control plane, CP) (referred to as CU-CP in this application) are separated. In other words, the gNB-CU or the donor-CU includes the CU-CP and the CU-UP. One gNB-CU may include one gNB-CU-CP and at least one gNB-CU-UP. Alternatively, one donor-CU may include one donor-CU-CP and at least one donor-CU-UP.

A network management device in FIG. 1A may be an operation, administration and maintenance network element (operation, administration and maintenance, OAM). The network management device may include an element management system (element management system, EMS) and a network management system (network management system, NMS). As shown in FIG. 1B, the network management device may be a function network element in a next generation core (Next Generation Core, NGC) or a 5G core (5G core, 5GC). Alternatively, the network management device may be a function network element deployed in a backbone network behind the 5GC, or the network management device may be deployed at another location. A specific deployment location of the network management device is not limited in this application.

The IAB node is connected to the core network through the IAB donor. For example, in a standalone (standalone, SA) 5G architecture, the IAB node is connected to the 5GC through the IAB donor. In a dual connectivity (dual connectivity, DC) or multi-connectivity (Multi-Connectivity, MC) 5G architecture (for example, in a non-standalone (non-standalone, NSA) or an NR-NR DC scenario), on a primary path, the IAB node may be connected to an evolved packet core (evolved packet core, EPC) through an evolved NodeB (evolved NodeB, eNB), or may be connected to the 5G core through the IAB donor.

To ensure service transmission reliability, in an IAB network, multi-hop IAB node networking and multi-connectivity IAB node networking are supported. Therefore, there may be a plurality of transmission paths between a terminal and an IAB donor. On one path, there is a determined hierarchical relationship between IAB nodes, and between an IAB node and a donor node connected to the IAB node. Each IAB node considers, as a parent node, a node providing a backhaul service for the IAB node. Correspondingly, each IAB node may be considered as a child node of the parent node of the IAB node.

For example, refer to FIG. 1A. A parent node of an IAB node 1 is an IAB donor, the IAB node 1 is a parent node of an IAB node 2 and an IAB node 3, both the IAB node 2 and the IAB node 3 are parent nodes of an IAB node 4, and a parent node of an IAB node 5 is the IAB node 2. An uplink data packet of a terminal may be transmitted to the IAB donor through one or more IAB nodes, and then is sent by the IAB donor to a mobile gateway device (for example, a user plane function (user plane function, UPF) network element in a 5G network). After the IAB donor receives a downlink data packet from the mobile gateway device, the IAB donor sends the downlink data packet to the terminal through the one or more IAB nodes. There are two available paths for data packet transmission between a terminal 1 and the IAB donor: terminal 1 → IAB node 4 → IAB node 3 → IAB node 1 → IAB donor, and terminal 1 → IAB node 4 → IAB node 2 → IAB node 1 → IAB donor. There are three available paths for data packet transmission between a terminal 2 and the IAB donor: terminal 2 → IAB node 4 → IAB node 3 → IAB node 1 → IAB donor, terminal 2 → IAB node 4 → IAB node 2 → IAB node 1 → IAB donor, terminal 2 → IAB node 5 → IAB node 2 → IAB node 1 → IAB donor. Each intermediate IAB node on an uplink path from an IAB node to the IAB donor may be referred to as an upstream node of the IAB node. For example, both the IAB node 1 and the IAB node 2 in FIG. 1A may be referred to as upstream IAB nodes of the IAB node 5. For example, a subordinate device of the IAB node may include a device directly accessing the IAB node, for example, a child node of the IAB node or UE accessing the IAB node. The IAB node 2 and the IAB node 3 in FIG. 1A may be referred to as subordinate devices of the IAB node 1, the IAB node 5 may be referred to as a subordinate device of the IAB node 2, the terminal 1 and the terminal 2 may be referred to as subordinate devices of the IAB node 4, and the terminal 1 may be referred to as a subordinate device of the IAB node 4.

It may be understood that, in the IAB network, one transmission path between the terminal and the IAB donor may include one or more IAB nodes. Each IAB node needs to maintain a wireless backhaul link to a parent node, and further needs to maintain a wireless link to a child node. If one IAB node is a node accessed by the terminal, a radio access link exists between the IAB node and a child node (namely, the terminal). If one IAB node is a node that provides a backhaul service for another IAB node, a wireless backhaul link exists between the IAB node and a child node (namely, the another IAB node). For example, refer to FIG. 1A. On a path "terminal 1 → IAB node 4 → IAB node 3 → IAB node 1 → IAB donor", the terminal 1 accesses the IAB node 4 through a wireless access link, the IAB node 4 accesses the IAB node 3 through a wireless backhaul link, the IAB node 3 accesses the IAB node 1 through a wireless backhaul link, and the IAB node 1 accesses the IAB donor through a wireless backhaul link.

The foregoing IAB networking scenario is merely an example. In an IAB scenario with multi-hop and multi-connectivity combined, there are more other possible IAB networking scenarios. For example, an IAB donor and an IAB node connected to another IAB donor form dual connectivity to serve a terminal. The possible IAB networking scenarios are not listed one by one herein.

In embodiments of this application, an access IAB node is an IAB node accessed by a terminal, and an intermediate IAB node is an IAB node that provides a wireless backhaul service for an IAB node (for example, the access IAB node or another intermediate IAB node). For example, refer to FIG. 1A. On the path "terminal 1 → IAB node 4 → IAB node 3 → IAB node 1 → IAB donor", the IAB node 4 is an access IAB node, and the IAB node 3 and the IAB node 1 are intermediate IAB nodes. It should be noted that, an IAB node is an access IAB node for a terminal that accesses the IAB node. An IAB node is an intermediate IAB node for a terminal that accesses another IAB node. Therefore, whether an IAB node is specifically an access IAB node or an intermediate IAB node is not fixed, and needs to be determined based on a specific application scenario.

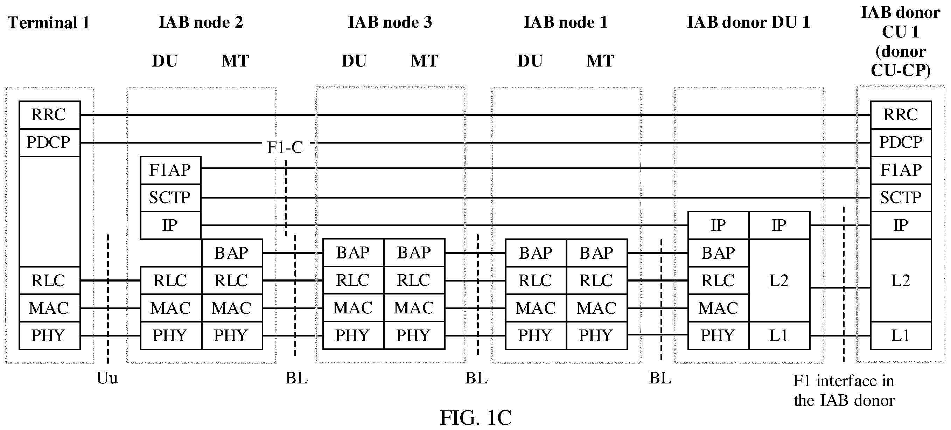

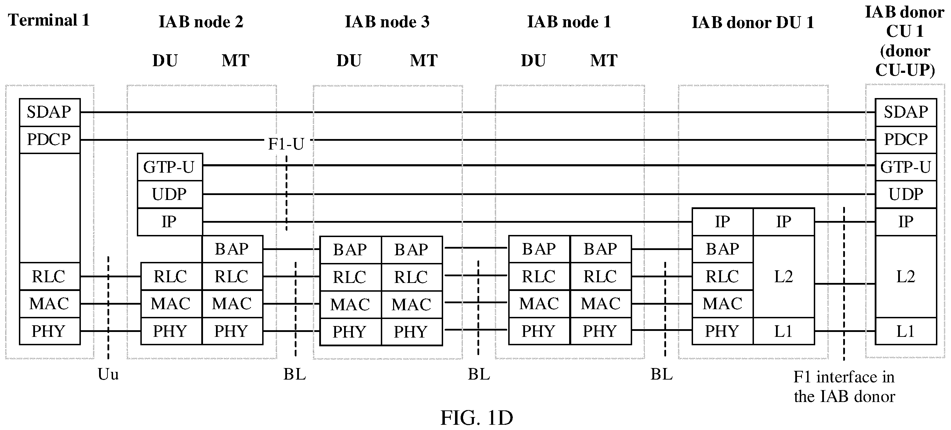

FIG. 1C and FIG. 1D each are a schematic diagram of a control plane protocol stack and a schematic diagram of a user plane protocol stack respectively in an IAB network according to embodiments of this application. The following provides descriptions with reference to FIG. 1C and FIG. 1D.

For a control plane, as shown in FIG. 1C, a Uu interface is set up between the terminal 1 and an IAB2-DU, and peer protocol layers include an RLC layer, a MAC layer, and a PHY layer. An F1-C interface is set up between the IAB2-DU and an IAB donor CU 1, and peer protocol layers include an F1 application protocol (F1 application protocol, F1AP) layer and a stream control transmission protocol (stream control transmission protocol, SCTP) layer. An IAB donor DU 1 and the IAB donor CU 1 are wiredly connected, and peer protocol layers include an Internet Protocol IP (internet protocol) layer, an L2, and an L1. BLs are set up between an IAB node 2 and an IAB node 3, between the IAB node 3 and an IAB node 1, and between the IAB node 1 and the IAB donor DU 1, and peer protocol layers include a backhaul adaptation protocol (Backhaul Adaptation Protocol, BAP) layer, an RLC layer, a MAC layer, and a PHY layer. In addition, a peer RRC layer and a peer PDCP layer are set up between the terminal 1 and the IAB donor CU 1, and a peer IP layer is set up between the IAB2-DU and the IAB donor DU 1.

It can be learned that, compared with a control plane protocol stack of a single air interface, in the control plane protocol stack in the IAB network, a DU of the access IAB node implements functions of a gNB-DU of the single air interface (to be specific, functions of setting up a peer RLC layer, a peer MAC layer, and a peer PHY layer with the terminal and setting up a peer F1AP layer, a peer SCTP layer, with a CU). It may be understood that the DU of the access IAB node in the IAB network implements the functions of the gNB-DU of the single air interface, and the IAB donor CU implements functions of a gNB-CU of the single air interface.

On the control plane, an RRC message is encapsulated in an F1AP message between the access IAB node and the IAB donor CU for transmission. Specifically, in an uplink direction, the terminal 1 encapsulates an RRC message in a PDCP protocol data unit (protocol data unit, PDU), and sends the PDCP PDU to the IAB2-DU after processing is sequentially performed at the RLC layer, the MAC layer, and the PHY layer. The IAB2-DU obtains a PDCP PDU after processing is sequentially performed at the PHY layer, the MAC layer, and the RLC layer, encapsulates the PDCP PDU in an F1AP message, and obtains an IP packet after processing is sequentially performed at the SCTP layer and the IP layer. An IAB2-MT sends the IP packet to an IAB3-DU after processing is sequentially performed at a BAP layer, an RLC layer, a MAC layer, and a PHY layer. Then, an IAB3-DU sequentially performs processing at a PHY layer, a MAC layer, an RLC layer, and a BAP layer to obtain an IP packet. Then, an IAB3-MT sends the IP packet to an IAB 1-DU by using an operation similar to that of the IAB2-MT. Similarly, an IAB 1-MT sends the IP packet to the IAB donor DU 1. After obtaining an IP packet through parsing, the IAB donor DU 1 sends the IP packet to the IAB donor CU 1. The IAB donor CU 1 sequentially performs processing on the IP packet at an SCTP layer, an F1AP layer, and a PDCP layer to obtain an RRC message. Operations in a downlink direction are similar. Details are not described herein again.

For a user plane, as shown in FIG. 1D, a Uu interface is set up between the terminal 1 and an IAB2-DU, and peer protocol layers include an RLC layer, a MAC layer, and a PHY layer. An F1-U interface is set up between the IAB2-DU and an IAB donor CU 1, and peer protocol layers include a GPRS tunnelling protocol for the user plane (GPRS tunnelling protocol for the user plane, GTP-U) layer and a user datagram protocol (user datagram protocol, UDP) layer. An IAB donor DU 1 and the IAB donor CU 1 are wiredly connected, and peer protocol layers include an IP layer, an L2, and an L1. BLs are set up between an IAB node 2 and an IAB node 3, between the IAB node 3 and an IAB node 1, and between the IAB node 1 and the IAB donor DU 1, and peer protocol layers include a BAP layer, an RLC layer, a MAC layer, and a PHY layer. In addition, a peer SDAP layer and a peer PDCP layer are set up between the terminal 1 and the IAB donor CU 1, and a peer IP layer is set up between the IAB2-DU and the IAB donor DU 1.

It can be learned that, compared with a user plane protocol stack of the single air interface, in the user plane protocol stack in the IAB network, a DU of an access IAB node implements a part of functions of a gNB-DU of the single air interface (to be specific, functions of setting up a peer RLC layer, a peer MAC layer, and a peer PHY layer with the terminal and setting up a peer GTP-U layer and a peer UDP layer with the IAB donor CU 1). It may be understood that the DU of the access IAB node implements a function of the gNB-DU of the single air interface, and the IAB donor CU implements a function of a gNB-CU of the single air interface.

On the user plane, a PDCP data packet is encapsulated in a GTP-U tunnel between the access IAB node and the IAB donor CU for transmission. The GTP-U tunnel is set up on the F1-U interface.

FIG. 1C and FIG. 1D are described by using the protocol stack in the IAB scenario shown in FIG. 1A as an example. It should be noted that one IAB node may play one or more roles. The IAB node may have a protocol stack of the one or more roles. Alternatively, the IAB node may have a set of protocol stacks, and for different roles of the IAB node, protocol layers corresponding to different roles in the protocol stacks may be for performing processing. The following uses an example in which the IAB node has a protocol stack of the one or more roles for description.

### (1) Protocol stack of a common terminal

When accessing the IAB network, the IAB node can function as a common terminal. In this case, an MT of the IAB node has a protocol stack of the common terminal, for example, the protocol stack of the terminal 1 in FIG. 1C and FIG. 1D: the RRC layer, the PDCP layer, the RLC layer, the MAC layer, and the PHY layer. On a control plane, an RRC message for the IAB node is encapsulated and transmitted in an F1AP message between a parent node of the IAB node and an IAB donor CU. On a user plane, a PDCP data packet of the IAB node is encapsulated and transmitted in a GTP-U tunnel between a parent node of the IAB node and an IAB donor CU.

In addition, after the IAB node accesses the IAB network, the IAB node may still play a role of the common terminal, for example, transmitting an uplink and/or downlink data packet (for example, an OAM data packet) of the IAB node with an IAB donor, and performing measurement through the RRC layer.

### (2) Protocol stack of an access IAB node

After the IAB node accesses the IAB network, the IAB node may provide an access service for a terminal, to play a role of the access IAB node. In this case, the IAB node has a protocol stack of the access IAB node, for example, the protocol stack of the IAB node 2 in FIG. 1C and FIG. 1D.

In this case, there may be two protocol stacks on an interface that is of the IAB node and that faces a parent node of the IAB node. One is a protocol stack of a common terminal, and the other is a protocol stack (that is, a protocol stack of the access IAB node) that provides a backhaul service for the terminal. Optionally, same protocol layers of the two protocol stacks may be shared. For example, the two protocol stacks correspond to a same RLC layer, a same MAC layer, a same PHY layer, or a same BAP layer.

### (3) Protocol stack of an intermediate IAB node

After the IAB node accesses the IAB network, the IAB node may function as an intermediate IAB node. In this case, the IAB node has a protocol stack of the intermediate IAB node, for example, a protocol stack of the IAB node 3 or the IAB node 1 in FIG. 1C and FIG. 1D.

In this case, there may be two protocol stacks on an interface that is of the IAB node and that faces a parent node of the IAB node. One is a protocol stack of a common terminal, and the other is a protocol stack (that is, a protocol stack of the intermediate IAB node) that provides a backhaul service for a child IAB node. Optionally, same protocol layers of the two protocol stacks may be shared. For example, the two protocol stacks correspond to a same RLC layer, a same MAC layer, a same PHY layer, or a same BAP layer.

In addition, the IAB node may play roles of an access IAB node and an intermediate IAB node at the same time. For example, the IAB node may be an access IAB node for some terminals and an intermediate IAB node for other terminals. In this case, the IAB node may have three protocol stacks: the protocol stack of the common terminal, the protocol stack of the access IAB node, and the protocol stack of the intermediate IAB node. Optionally, same protocol layers of the three protocol stacks may be shared. For example, the three protocol stacks correspond to a same RLC layer, a same MAC layer, a same PHY layer, or a same BAP layer.

It should be noted that FIG. 1C and FIG. 1D are described by using the IAB network as an example. Content in FIG. 1C and FIG. 1D is also applicable to a relay network of another type different from the IAB network. For a control plane protocol stack architecture of the relay network, refer to FIG. 1C. For a user plane protocol stack architecture of the relay network, refer to FIG. 1D. The IAB node in FIG. 1C and FIG. 1D may be replaced with a relay (relay). For example, the IAB node 2 may be replaced with a relay node 2, the IAB node 3 may be replaced with a relay node 3, the IAB node 1 may be replaced with a relay node 1, and the IAB donor 1 may be replaced with a donor node 1. The donor node has a CU-DU protocol stack. Other content is the same as the content described in FIG. 1C and FIG. 1D. For details, refer to the descriptions in FIG. 1C and FIG. 1D. Details are not described herein again.

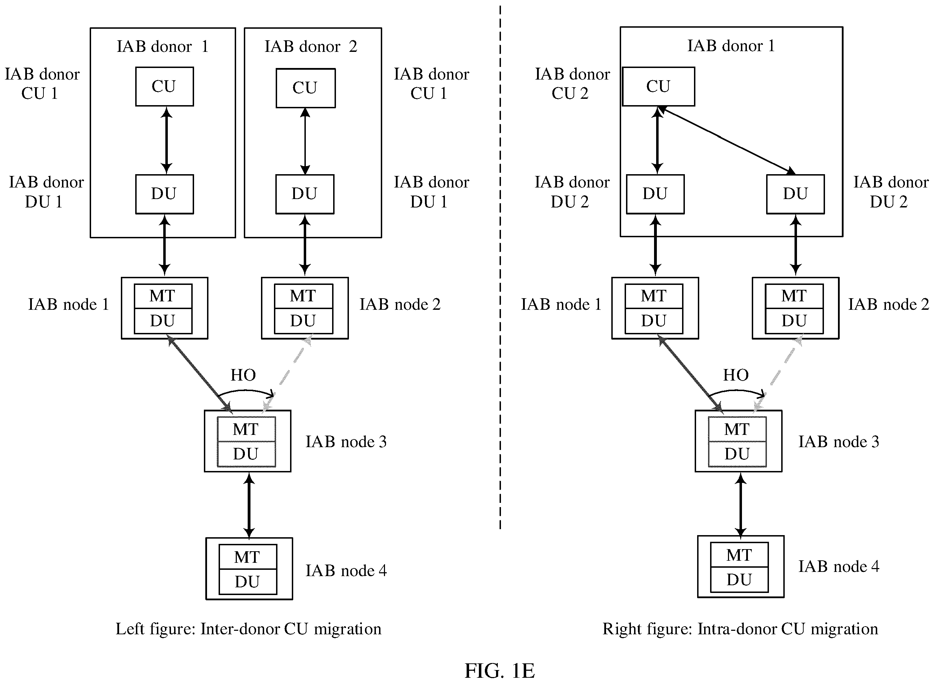

As shown in FIG. 1E, an IAB node (for example, an IAB node 3 in FIG. 1E) in the IAB network may migrate.

The IAB node migrates from a source parent node (for example, an IAB node 1 in FIG. 1E) to a target parent node (for example, an IAB node 2 in FIG. 1E), and changes a connected IAB donor, that is, migrates from a source IAB donor (for example, an IAB donor 1 in FIG. 1E) to a target IAB donor (for example, an IAB donor 2 in FIG. 1E). This may be referred to as inter-IAB donor migrating or inter-donor CU migrating (inter-donor CU migrating).

The IAB node migrates from a source parent node (for example, an IAB node 1 in FIG. 1E) to a target parent node (for example, an IAB node 2 in FIG. 1E), but does not change an IAB donor. This may be referred to as intra-IAB donor migrating or intra-donor CU migrating (intra-donor CU migrating).

A child node (for example, an IAB node 4 in FIG. 1E) of the IAB node may migrate along with the IAB node, that is, may also migrate from the source IAB donor to the target IAB donor. The method provided in embodiments of this application is applicable to migration of the IAB node, and is also applicable to a scenario in which a child node of the IAB node migrates along with the IAB node.

For a method for migrating a child node of the IAB node, refer to the IAB node migration method provided in this application.

In this application, an MT of the IAB node may be referred to as an IAB-MT for short, a DU of the IAB node may be referred to as an IAB-DU for short, a CU of the IAB donor may be referred to as a donor-CU for short, and a DU of the IAB donor may be referred to as a donor-DU for short.

In this application, the IAB donor connected to the IAB node may be referred to as an IAB donor of the IAB node for short. The IAB node may directly access the IAB donor, or the IAB node may be connected to the IAB donor through another IAB node.

In this application, the IAB donor connected to the IAB node may be referred to as an IAB donor of the IAB node for short. A cell served by the IAB donor of the IAB node may include a cell served by the DU of the IAB donor or a cell deployed by the DU of the IAB donor. The IAB node may directly access the IAB donor, or the IAB node may be connected to the IAB donor through another IAB node.

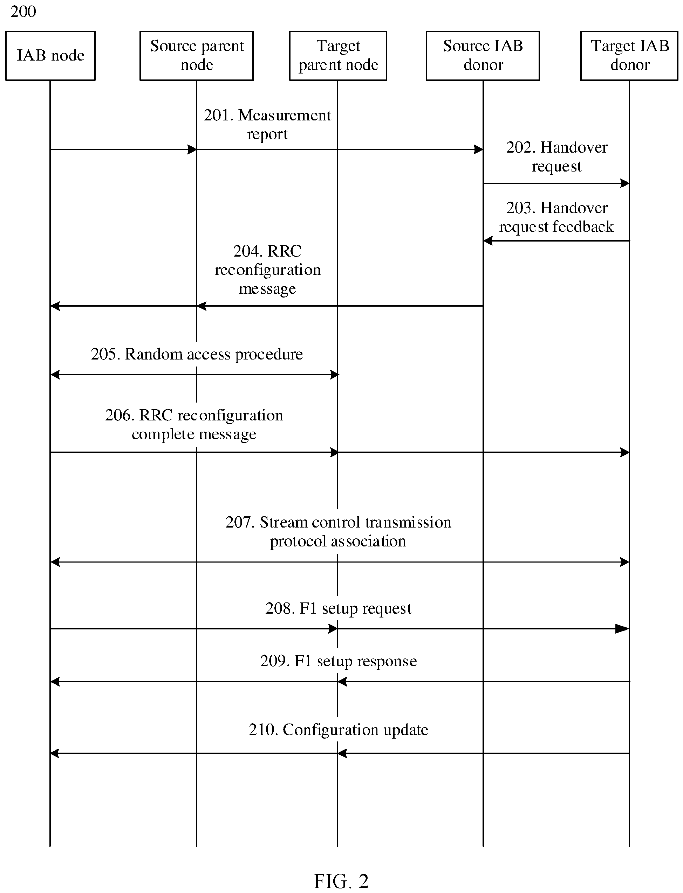

FIG. 2 shows a communication method according to an embodiment of this application. The communication method 200 includes the following steps.

S201. An IAB node sends a measurement report to a source IAB donor.

The measurement report may be for reporting a signal quality measurement result of a neighboring cell. The measurement report may be carried in an RRC message. When being transmitted between a source parent node and the source IAB donor, the RRC message may be encapsulated in an F1AP message between the source parent node and the source IAB donor.

S202. The source IAB donor sends a handover request message for the IAB node to a target IAB donor.

The source IAB donor determines, based on the measurement report, a target parent node to which the IAB node (or an IAB-MT) is to migrate, and sends the handover request to the target donor node. The handover request message for the IAB node is for requesting the target IAB donor to hand over the IAB node (or the IAB-MT) from the source IAB donor to the target IAB donor. Alternatively, the handover request message for the IAB node is for requesting the target IAB donor to hand over the IAB node (or the IAB-MT) from the source parent node to the target parent node.

S203. The target IAB donor sends a handover request response message for the IAB node to the source IAB donor.

The handover request response message for the IAB node indicates to the source IAB donor that the target IAB donor agrees upon access of the IAB node. The handover request response may partially or entirely include an RRC reconfiguration message sent by the source IAB donor to the IAB node (or the IAB-MT), for example, some configurations required when the IAB node (or the IAB-MT) performs a random access procedure with the target parent node.

S204. The source IAB donor sends the RRC reconfiguration message to the IAB node (or the IAB-MT) through the source parent node.

The RRC reconfiguration message includes the some configurations required when the IAB node (or the IAB-MT) performs the random access procedure with the target parent node. When the RRC reconfiguration message is transmitted between the source parent node and the source IAB donor, the RRC reconfiguration message may be encapsulated in an F1AP message between the source parent node and the source IAB donor.

S205. The IAB node (or the IAB-MT) performs the random access procedure with the target parent node.

Through S205, the IAB node (or the IAB-MT) may set up an RRC connection to the target IAB donor through the target parent node.

S206. The IAB node (or the IAB-MT) sends an RRC reconfiguration complete message to the target IAB donor through the target parent node.

The RRC reconfiguration complete message indicates, to the target donor node, that setup of the RRC connection is complete.

When the RRC reconfiguration complete message is transmitted between the target parent node and the target donor node, the RRC reconfiguration complete message may be encapsulated in an F1AP message between the target parent node and the target donor node.

S207. The IAB node establishes an initial SCTP association with the target IAB donor.

For example, the IAB node may establish the initial SCTP association with the target IAB donor based on a plurality of IP addresses configured by a network management device. For example, the IAB node may select one IP address from the plurality of IP addresses to establish the initial SCTP association with the target IAB donor. When the IAB node fails to establish the initial SCTP association with the target IAB donor based on one of the IP addresses, the IAB node may select another IP address to continue to establish the initial SCTP association with the target IAB donor.

S208. The IAB node sends an F1 setup request message to the target IAB donor.

The IAB node may send the F1 setup request to the target IAB donor through the target parent node. For example, the F1 setup request carries related information for setting up a first F1 interface. The F1 setup request is for requesting the target IAB donor to set up the first F1 interface. The first F1 interface is a communication interface between a DU of the IAB node and a CU of the target IAB donor. For specific content included in the F1 setup request message, refer to section 9.2.1.4 in the 3rd Generation Partnership Project (the 3rd generation partnership project, 3GPP) technical standard (technical standard, TS) 38.473 V16.1.0.

S209. The target IAB donor sends an F1 setup response message to the IAB node.

The target IAB donor may send the F1 setup response to the IAB node through the target parent node. For example, the F1 setup response carries the related information for setting up the first F1 interface. The F1 setup response indicates, to the IAB node, that the target IAB donor agrees to set up the first F1 interface. For specific content included in the F1 setup response message, refer to section 9.2.1.5 in 3GPP TS 38.473 V16.1.0.

S210. The target IAB donor sends configuration update information to the IAB node.

Optionally, after the F1 interface is set up between the IAB node and the target IAB donor, the target IAB donor may further send IAB-DU configuration update information to the IAB node. The IAB-DU configuration update information may be carried in CU configuration update (GNB-CU CONFIGURATION UPDATE) information sent by the target IAB donor (or a target donor CU) to the IAB node.

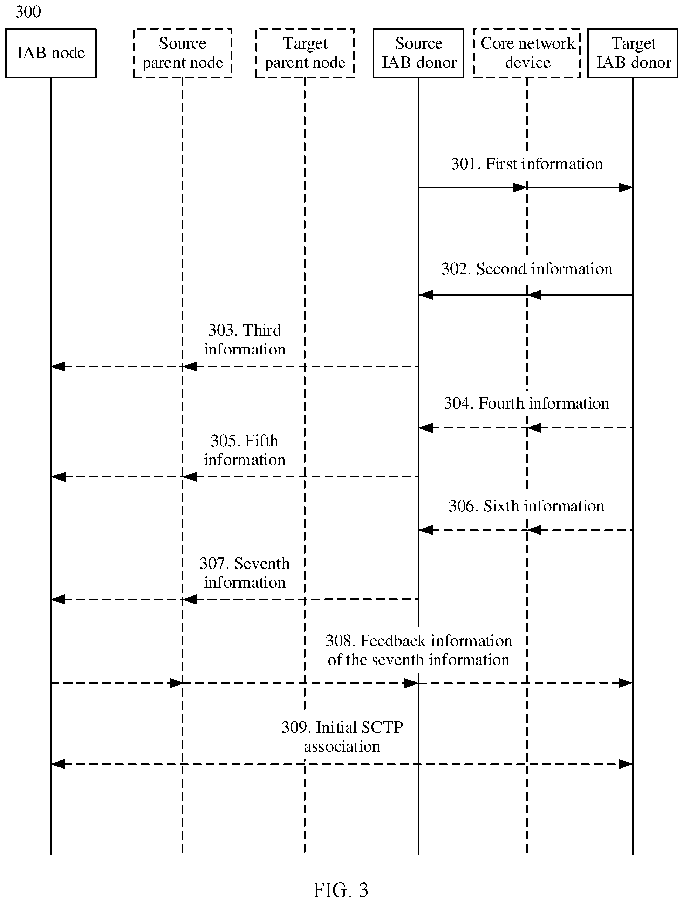

FIG. 3 shows a communication method according to an embodiment of this application. The communication method 300 includes the following steps.

S301. A source IAB donor of an IAB node sends first information to a target IAB donor of the IAB node.

The IAB node may directly access the source IAB donor, or the IAB node may be connected to the source IAB donor through one or more upstream IAB nodes. The target IAB donor may be determined by the source IAB donor based on a measurement report from the IAB node. Likewise, after the IAB node migrates to the target IAB donor, the IAB node may directly access the target IAB donor, or the IAB node may be connected to the target IAB donor through one or more upstream IAB nodes.

The IAB node may be a migrating IAB node whose parent node needs to change. To be specific, the source IAB donor determines that the migrating IAB node needs to migrate from a source parent node to a target parent node. Alternatively, the IAB node may be a child node of the migrating IAB node. To be specific, the IAB node may migrate together with the migrating IAB node. For example, the IAB node may be the IAB node 3 in the left figure of FIG. 1E, or may be the IAB node 4 in the left figure of FIG. 1E.

Specifically, a source donor-CU of the IAB node may send the first information to a target donor-CU of the IAB node. For example, the first information may be referred to as an F1 handover request.

For example, the source IAB donor and the target IAB donor may exchange the first information through an X2 interface or an Xn interface. The X2 interface is generally an interface between eNBs, and the Xn interface is generally an interface between gNBs. The first information may be carried in an X2 application protocol (X2 application protocol, X2AP) message or an Xn application protocol (Xn application protocol, XnAP) message between the source IAB donor and the target IAB donor. For example, the first information may be carried in a handover request message that is for the IAB node and that is sent by the source IAB donor to the target IAB donor (for the handover request message for the IAB node, refer to S202). Alternatively, the first information may be encapsulated in an F1AP container (container) information element, and then is carried in an X2AP message or an XnAP message. The first information is carried in an existing message, so that signaling overheads can be reduced.

Optionally, the source IAB donor and the target IAB donor may forward and exchange the first information through S1 interfaces or NG interfaces to a core network device. The S1 interface is generally an interface between an eNB and an EPC, and the NG interface is generally an interface between a gNB and an NGC. For example, the source IAB donor sends the first information to the core network device through the S1 interface or the NG interface. After receiving the first information, the core network device forwards the first information to the target IAB donor through the S1 interface or the NG interface. The core network device may be a mobility management entity (mobility management entity, MME) or an access management function (access management function, AMF) network element. For example, the first information may be carried in a handover required (handover required) message sent by the source IAB donor to the core network device and a handover request (handover request) message sent by the core network device to the target IAB donor. According to this design, the source IAB donor and the target IAB donor may exchange the first information through the core network device, thereby ensuring setup of a first F 1 interface.

The first information includes request information for setting up the first F1 interface. For example, the first information may be an F1 setup request (F1 SETUP REQUEST). The first F1 interface may be a communication interface between an IAB-DU and the target donor-CU. The request information for setting up the first F1 interface may include all or a part of content of an F1 setup request message (for the F1 setup request message, refer to S208). Specifically, the request information for setting up the first F1 interface may include at least one of the following information: an IAB-DU identifier (ID), an IAB-DU name (name), served cell information of a cell served by the IAB node (served cell information of a cell served by the IAB node), a system information configuration (for example, a synchronization signal and PBCH block (synchronization signal and physical broadcast channel block, SSB) related configuration) sent by the DU of the IAB node, an RRC version supported by the DU of the IAB node, and transport layer address information of the DU of the IAB node. The SSB related configuration may include an SSB frequency, an SSB period, an SSB carrier spacing, an SSB offset (Offset), SSB duration (Duration), or the like. For example, the cell served by the IAB node may include a cell served by the DU of the IAB node or a cell deployed by the DU of the IAB node. According to this design, the request information for setting up the first F1 interface carries related information for setting up the first F1 interface, to request, through implicit indication, the target IAB donor to set up the first F1 interface, and provide the target IAB donor with information required for setting up the first F1 interface.

The information included in the request information for setting up the first F1 interface may be obtained by the source IAB donor from the IAB node in advance. For example, the source IAB donor stores message content indicating that the IAB node previously initiates an F1 setup request to the source IAB node, or the source IAB donor requests the IAB node to send, to the source IAB donor, all or a part of information included in the request information for setting up the first F1 interface.

S302. The target IAB donor sends second information to the source IAB donor.

Specifically, the target donor-CU of the IAB node may send the second information to the source donor-CU of the IAB node. For example, the second information may be referred to as an F1 handover response.

For example, the source IAB donor and the target IAB donor may exchange the second information through an X2 interface or an Xn interface. The second information may be carried in an X2AP or XnAP message between the source IAB donor and the target IAB donor. For example, the second information may be carried in a handover request response message that is for the IAB node and that is sent by the target IAB donor to the source IAB donor (for the handover request response message for the IAB node, refer to S203). Alternatively, the second information may be encapsulated in an F1AP container (container) information element, and then is carried in an X2AP message or an XnAP message. The second information is carried in an existing message, so that signaling overheads can be reduced.

Optionally, the source IAB donor and the target IAB donor may forward and exchange the second information through the S1 interfaces or the NG interfaces to the core network device. For example, the target IAB donor sends the second information to the core network device through the S1 interface or the NG interface. After receiving the second information, the core network device forwards the second information to the source IAB donor through the S1 interface or the NG interface. For example, the second information may be carried in a handover request acknowledge message (handover request acknowledge, handover request ACK) sent by the target IAB donor to the core network device and a handover command (handover command) sent by the core network device to the source IAB donor. According to this design, the source IAB donor and the target IAB donor may exchange the second information through the core network device, thereby ensuring that the IAB node can obtain feedback information from the target IAB donor for the first information.

The second information includes feedback information of the request information. The feedback information may be generated by the target IAB donor based on the received first information.

For example, when the target IAB donor agrees to set up the first F1 interface, the feedback information may be response information for setting up the first F1 interface. For example, the feedback information may be an F1 setup response (F1 SETUP RESPONSE). The response information for setting up the first F 1 interface may include all or a part of content of an F1 setup response message (for the F1 setup response message, refer to S209). Specifically, the response information for setting up the first F1 interface includes at least one of the following: information for identifying the target IAB donor, activation information of the cell served by the IAB node, an RRC version supported by the CU of the target IAB donor, transport layer address information of the CU of the target IAB donor, and a synchronization signal block transmission configuration (synchronization signal block transmission configuration, STC) of the DU of the IAB node. The activation information of the cell served by the IAB node may include information about one or more cells that need to be activated. The information for identifying the target IAB donor may include any one of the following: an identifier (ID) or a name (name) of the target IAB donor, a CU identifier (ID) or name (name) of the target IAB donor, or a base station identifier (gNB ID) or name (name) of the target IAB donor. According to this design, the target IAB donor may implicitly indicate, to the source IAB donor by including the related information for setting up the first F1 interface in the response information for setting up the first F1 interface, that the target IAB donor agrees to set up the first F1 interface, and provide, through the source IAB donor, the IAB node with the information required for setting up the first F1 interface. In addition, the information for identifying the target IAB donor may be used as explicit indication information to indicate, to the IAB node, that the response information corresponds to the target IAB donor, so that the IAB node can determine whether the received information is information for setting up the first F1 interface or information for updating a configuration of a second F1 interface. The second F1 interface is a communication interface between the DU of the IAB node and a CU of the source IAB donor.

For example, when the target IAB donor refuses to or cannot set up the first F1 interface, the feedback information may be indication information indicating that setup of the first F1 interface fails. For example, the feedback information may be F1 setup failure (F1 SETUP FAILURE). For the F1 SETUP FAILURE, refer to section 9.2.1.6 in the 3rd Generation Partnership Project (the 3rd generation partnership project, 3GPP) technical standard (technical standard, TS) 38.473 V16.1.0. In this case, subsequent operations in this embodiment of this application may not be performed. Optionally, the source IAB donor may determine, based on the feedback information, to perform S301 again, to be specific, continue to send the first information to the target IAB donor, to attempt to set up the first F1 interface. Alternatively, the source IAB donor may determine, based on the feedback information, not to perform S301 again. For example, the source IAB donor may perform an operation with reference to the method 200. According to this design, the source IAB donor may determine, based on the received indication information indicating that setup of the first F1 interface fails, that the target IAB donor refuses to or cannot set up the first F1 interface. Further, the source IAB donor may determine whether to continue to send the first information to the target IAB donor, to attempt to set up the first F1 interface, thereby improving a success rate of setting up the first F1 interface.

S303. The source IAB donor sends third information to the IAB node.

When the feedback information is the response information for setting up the first F1 interface, the source IAB donor may send the third information to the IAB node after receiving the response information, where the third information includes the response information for setting up the first F1 interface.

Specifically, when the IAB node is connected to the source IAB donor through the source parent node, the source IAB donor may send the third information to the IAB node through the source parent node of the IAB node.

For example, the source IAB donor may include the response information for setting up the first F1 interface in an RRC reconfiguration message sent by the source IAB donor (or the source donor CU) to the IAB node (or an IAB-MT) (for the RRC reconfiguration message, refer to S204). After receiving the response information for setting up the first F1 interface, the MT of the IAB node may send the response information to the DU of the IAB node through an internal interface. The third information is carried in an existing message, so that signaling overheads can be reduced.

Optionally, the source IAB donor may include the response information for setting up the first F1 interface in another existing RRC message sent by the source IAB donor (or the source donor CU) to the IAB node (or the IAB-MT) or include the response information in an RRC message that separately carries the response information. After receiving the response information for setting up the first F1 interface, the MT of the IAB node may send the response information to the DU of the IAB node through an internal interface.

Optionally, the source IAB donor may include the response information for setting up the first F1 interface in an F1AP message, on the second F1 interface, sent by the source IAB donor (or the source donor CU) to the IAB node (or the IAB-DU), where the second F1 interface is a communication interface between the DU of the IAB node and the CU of the source IAB donor. For example, after the second information is encapsulated in an F1AP container (container) information element, when the second information is carried in an X2AP message or an XnAP message and sent by the target IAB donor to the source IAB donor, the source IAB donor may transparently transmit the second information as the third information to the IAB node. According to this design, the target IAB donor may send the second information to the IAB node through the source IAB donor in a form of an encapsulated F1AP container (container) information element, to prevent the source IAB donor from parsing the second information, thereby improving transmission security of the second information. In addition, a change to an existing RRC reconfiguration message can be avoided.

When the response information for setting up the first F1 interface is carried in the F1AP message on the second F1 interface, to enable the IAB node to determine whether the information carried in the F1AP message on the second F1 interface is the information for setting up the first F1 interface or the information for updating the configuration of the second F1 interface, the F1AP message on the second F1 interface may include indication information, where the indication information indicates that the information included in the F1AP message on the second F1 interface is information corresponding to the target IAB donor or the information for setting up the first F1 interface. For example, the indication information may be carried in the F1AP message on the second F1 interface together with the response information for setting up the first F1 interface. Optionally, the indication information may be included in the response information for setting up the first F1 interface. For example, the information that is included in the response information for setting up the first F1 interface and that is for identifying the target IAB donor may be used as the indication information. According to this design, the IAB node can determine, based on the indication information carried in the F1AP message on the second F1 interface, whether the information carried in the F1AP message on the second F1 interface is the information for setting up the first F1 interface or the information for updating the configuration of the second F1 interface, so that different subsequent processing can be performed.

Optionally, the F1AP message on the second F1 interface may not explicitly carry the indication information. For example, a new procedure may be specified between the source IAB donor and the IAB node. The procedure is a set of procedures specially for sending, to the IAB node in advance, the related information that is from the target IAB donor and that is for setting up the first F1 interface. For example, the IAB node may determine, based on information received before the F1AP message that is on the second F1 interface, that the information included in the F1AP message on the second F1 interface is the information corresponding to the target IAB donor or the information for setting up the first F1 interface.

For example, the IAB node may determine, based on the indication information included in the received F1AP message on the second F1 interface, that the response information that is for setting up the first F1 interface and that is included in the F1AP message on the second F1 interface corresponds to the target IAB donor, that is, determine that the information carried in the F1AP message on the second F1 interface is the information for setting up the first F1 interface, but not the information for updating the configuration of the second F1 interface. The IAB node configures the first F1 interface based on the received third information.

For example, the third information may be referred to as an F1 handover command.

S303 is an optional operation. In other words, this embodiment may not include this operation. For example, when the feedback information is F1 setup failure information, S303 does not need to be performed.

According to the foregoing method, the source IAB donor exchanges, with the target IAB donor, the related information for setting up the first F1 interface, so that the DU of the IAB node can obtain configuration information of the DU on the target IAB donor more quickly, thereby implementing efficient migration. In addition, the target IAB donor may flexibly indicate, based on the feedback information, a status of setting up the first F1 interface, thereby improving efficiency of setting up the first F1 interface.

S304. The target IAB donor sends fourth information to the source IAB donor.

For a specific method for sending the fourth information by the target IAB donor to the source IAB donor, refer to the method for sending the second information by the target IAB donor to the source IAB donor in S302. Details are not described herein again. The fourth information and the second information may be carried in a same message.

The fourth information includes IP address information of the target IAB donor, and the IP address information is for establishing an initial SCTP association between the target IAB donor and the IAB node. According to this method, the target IAB donor sends the IP address information of the target IAB donor to the IAB node, so that the IAB node can quickly establish the SCTP association with the target IAB donor based on the IP address information. This further improves a success rate of establishing the SCTP association between the target IAB donor and the IAB node.

The IP address information of the target IAB donor includes at least one of the following: an IP address of the target IAB donor for the first F1 interface, an IP address type of the target IAB donor for the first F1 interface, an IP address prefix of the target IAB donor for the first F1 interface, a quantity of IP addresses of the target IAB donor for the first F1 interface, an IP address of the target IAB donor for a first F1-C interface or an F1-C service, an IP address type of the target IAB donor for the first F1-C interface or the F1-C service, an IP address prefix of the target IAB donor for the first F1-C interface or the F1-C service, a quantity of IP addresses of the target IAB donor for the first F1-C interface or the F1-C service, an IP address of the target IAB donor for a first F1-U interface or an F1-U service, an IP address type of the target IAB donor for the first F1-U interface or the F1-U service, an IP address prefix of the target IAB donor for the first F1-U interface or the F1-U service, and a quantity of IP addresses of the target IAB donors for the first F1-U interface or the F1-U service. The first F1-C interface is a control plane interface of the first F1 interface, the first F1-U interface is a user plane interface of the first F1 interface, the F1-C service includes a service passing through the first F1-C interface, and the F1-U service includes a service passing through the first F1-U interface. The IP address type may include an IPv4 type and/or an IPv6 type. According to this design, the target IAB donor may select a type of IP address information based on a requirement, and then send the IP address information to the IAB node through the source IAB donor.

The IP address of the target IAB donor for the first F1 interface includes an IP address of a CU corresponding to the first F1 interface, for example, an IP address of a donor-CU. The IP address of the target IAB donor for the first F1-C interface or the F1-C service includes an IP address of a CU corresponding to the first F1-C interface, for example, an IP address of a donor-CU-CP. The IP address of the target IAB donor for the first F1-U interface or the F1-U service includes an IP address of a CU corresponding to the first F1-U interface, for example, an IP address of a donor-CU-UP.

Optionally, the target IAB donor may send the fourth information to the source IAB donor at a request of the IAB node. For example, the IAB node sends IP address request information to the source IAB donor, where the IP address request information is for requesting an IP address from the target IAB donor. The source IAB donor forwards the IP address request information to the target IAB donor. Alternatively, the target IAB donor may send the fourth information to the source IAB donor based on the first information from the source IAB donor.

S305. The source IAB donor sends fifth information to the IAB node.

After receiving the fourth information, the source IAB donor sends the fifth information to the IAB node, where the fifth information includes the IP address information.

For a specific method for sending the fifth information by the source IAB donor to the IAB node, refer to the method for sending the third information by the source IAB donor to the IAB node in S303. Details are not described herein again. The fifth information and the third information may be carried in a same message.

S304 and S305 may be performed before S301 to S303, or may be performed after S308. An execution occasion of S304 and S305 is not limited in this embodiment of this application.

S304 and S305 are optional operations. In other words, this embodiment may not include the two operations. For example, it is still a network management device that pre-configures a plurality of IP addresses (refer to the IP address allocation in operation S207).

S306. The target IAB donor sends sixth information to the source IAB donor.

The sixth information includes request information for setting up a context of a subordinate device of the IAB node in the IAB node and/or the target IAB donor, where the request information is for requesting to set up the context of the subordinate device of the IAB node in the IAB node and/or the target IAB donor. The subordinate device of the IAB node includes a child IAB node of the IAB node or a terminal device accessing the IAB node.

The request information for setting up the context of the subordinate device of the IAB node in the IAB node and/or the target IAB donor may include a part or all of a user context setup request message in an F1AP procedure (for specific content included in the user context setup request message, refer to section 9.2.2.1 in 3GPP TS 38.473 V16.1.0). Specifically, the request information for setting up the context of the subordinate device of the IAB node in the IAB node and/or the target IAB donor includes at least one of the following: an F1 application protocol identifier corresponding to the subordinate device of the IAB node, a setup list of SCells served by the IAB node, a setup list of SRBs between the IAB node and the subordinate device of the IAB node, a setup list of DRBs between the IAB node and the subordinate device of the IAB node, a setup list of BH RLC CHs between the IAB node and the subordinate device of the IAB node (or a child node of the IAB node), a user plane data routing rule of the IAB node, and a user plane bearer mapping rule of the IAB node.

According to this design, by including, in the request information for setting up the context of the subordinate device of the IAB node in the IAB node and/or the target IAB donor, related information for setting up the context of the subordinate device of the IAB node in the IAB node and/or the target IAB donor, the target IAB donor may request, through implicit indication, the source IAB donor to set up the context of the subordinate device of the IAB node in the IAB node and/or the target IAB donor and provide, through the source IAB donor, the IAB node with information required for setting up the context of the subordinate device of the IAB node in the IAB node and/or the target IAB donor.

For a specific method for sending the sixth information by the target IAB donor to the source IAB donor, refer to the method for sending the second information by the target IAB donor to the source IAB donor in S302. Details are not described herein again. At least one of the second information, the fourth information, and the sixth information may be carried in a same message, so that signaling overheads can be reduced. In addition, data communication between the IAB node and the target IAB donor can be set up more quickly, to improve communication efficiency of an IAB network.

S307. The source IAB donor sends seventh information to the IAB node.

After receiving the sixth information, the source IAB donor sends the seventh information to the IAB node, where the seventh information includes the request information for setting up the context of the subordinate device of the IAB node in the IAB node and/or the target IAB donor.

For a specific method for sending the seventh information by the source IAB donor to the IAB node, refer to the method for sending the third information by the source IAB donor to the IAB node in S303. Details are not described herein again. At least one of the third information, the fifth information, and the seventh information may be carried in a same message, so that signaling overheads can be reduced. In addition, data communication between the IAB node and the target IAB donor can be set up more quickly, to improve communication efficiency of the IAB network.

S308. The IAB node sends feedback information of the seventh information to the target IAB donor.

The feedback information of the seventh information may be response information for setting up the context of the subordinate device of the IAB node in the IAB node and/or the target IAB donor.

The response information for setting up the context of the subordinate device of the IAB node in the IAB node and/or the target IAB donor may include a part or all of a user context setup response message in the F1AP procedure (for specific content included in the user context setup response message, refer to section 9.2.2.2 in 3GPP TS 38.473 V16.1.0). Specifically, the response information for setting up the context of the subordinate device of the IAB node in the IAB node and/or the target IAB donor includes at least one of the following: a C-RNTI allocated by the IAB node to the subordinate device of the IAB node, a list of DRBs between the IAB node and the subordinate device of the IAB node that are successfully or unsuccessfully set up, and a list of SRBs between the IAB node and the subordinate device of the IAB node that are successfully or unsuccessfully set up, a list of BH RLC CHs between the IAB node and the subordinate device of the IAB node that are successfully or unsuccessfully set up, and a list of SCells served by the IAB node that are successfully or unsuccessfully set up.

Specifically, when the IAB node is connected to the source IAB donor through the source parent node, the IAB node may first send the feedback information of the seventh information to the source IAB donor through the source parent node, and then the source IAB donor sends the feedback information of the seventh information to the target IAB donor.

For example, the IAB node may include the feedback information of the seventh information in any existing RRC message sent by the IAB node (or the IAB-MT) to the source IAB donor (or the donor CU) or include the feedback information in an RRC message that separately carries the response information. Optionally, the IAB node may include the feedback information of the seventh information in an F 1AP message on the second F1 interface that is sent by the IAB node (or the IAB-DU) to the source IAB donor (or the donor CU). The second F1 interface is a communication interface between the DU of the IAB node and the CU of the source IAB donor.

For a specific method for sending the feedback information of the seventh information by the source IAB donor to the target IAB donor, refer to the method for sending the first information by the source IAB donor to the target IAB donor in S301. Details are not described herein again.

Optionally, the feedback information of the seventh information may be indication information indicating that the context of the subordinate device of the IAB node fails to be set up in the IAB node and/or the target IAB donor. For example, the feedback information may be context setup failure (CONTEXT SETUP FAILURE). For details about the CONTEXT SETUP FAILURE, refer to section 9.2.2.3 in 3GPP TS 38.473 V16.1.0. Optionally, the target IAB donor may determine, based on the feedback information, to perform S306 again, to be specific, continue to send the sixth information to the source IAB donor, and the source IAB donor continues to send the seventh information to the IAB node, to attempt to set up the context of the subordinate device of the IAB node in the IAB node and/or the target IAB donor. Alternatively, the target IAB donor may determine, based on the feedback information, not to perform S306 again. For example, after the IAB node migrates to the target IAB donor, the IAB donor may attempt to set up the context of the subordinate device of the IAB node in the IAB node and/or the target IAB donor.

According to the foregoing method, the source IAB donor and the target IAB donor exchange the related information of the context of the subordinate device of the IAB node, so that the target IAB donor can obtain the context of the subordinate device of the IAB node more quickly, thereby reducing time of inter-donor CU migrating of the IAB node, and implementing efficient migration.

S306 to S308 are optional operations. In other words, this embodiment may not include the three operations. For example, the three operations may be performed after the IAB node migrates to the target IAB donor and then the context of the subordinate device is set up by the IAB node and the target IAB donor.

S309. The IAB node establishes the initial SCTP association with the target IAB donor.

Specifically, the initial SCTP association may be established between the IAB node and the CU of the target IAB donor. The IAB node uses an IP address to establish the initial SCTP association with the target IAB donor. The IP address may be selected from the plurality of IP addresses configured by the network management device, or the IP address is obtained based on the fifth information in S305.

Further, the IAB node may associate the related information of the first F1 interface with the SCTP association, and/or the IAB node may associate the SCTP association with the context that is of the subordinate device of the IAB node and that is set up in the IAB node and/or the target IAB donor. For example, the target IAB donor may send IAB-DU configuration update information to the IAB node. The IAB-DU configuration update information may be carried in GNB-CU CONFIGURATION UPDATE information sent by the target IAB donor (or the target donor CU) to the IAB node. The IAB node may associate, based on the configuration update information, the related information of the first F1 interface with the SCTP association, and/or associate the SCTP association with the context that is of the subordinate device of the IAB node and that is set up in the IAB node and/or the target IAB donor.

Optionally, the IAB node may delete another SCTP association on the DU of the IAB node based on the configuration update information.

Further, an IP address for a subsequent SCTP association may also be obtained based on the IP address information in the fifth information in S305. Alternatively, an IP address for a subsequent SCTP association is obtained based on the GNB-CU CONFIGURATION UPDATE information sent by the target IAB donor (or the target donor CU) to the IAB node.

S309 may be performed after S304 and S305, or may be performed after S308. An execution occasion of S309 is not limited in this embodiment of this application.

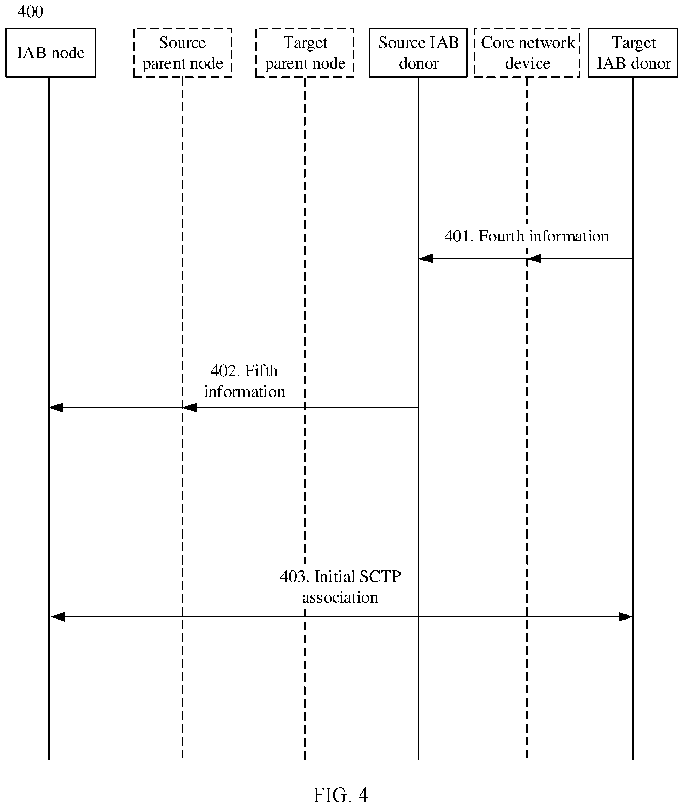

FIG. 4 shows a communication method according to an embodiment of this application. The communication method 400 includes the following steps.

S401. A target IAB donor of an IAB node sends fourth information to a source IAB donor of the IAB node.

Specifically, a target donor-CU of the IAB node may send the second information to a source donor-CU of the IAB node.

The IAB node may directly access the source IAB donor, or the IAB node may be connected to the source IAB donor through one or more upstream IAB nodes. The target IAB donor may be determined by the source IAB donor based on a measurement report from the IAB node. Likewise, after the IAB node migrates to the target IAB donor, the IAB node may directly access the target IAB donor, or the IAB node may be connected to the target IAB donor through one or more upstream IAB nodes.

The IAB node may be a migrating IAB node whose parent node needs to change. To be specific, the source IAB donor determines that the migrating IAB node needs to migrate from a source parent node to a target parent node. Alternatively, the IAB node may be a child node of the migrating IAB node. To be specific, the IAB node may migrate together with the migrating IAB node. For example, the IAB node may be the IAB node 3 in the left figure of FIG. 1E, or may be the IAB node 4 in the left figure of FIG. 1E.

For example, the source IAB donor and the target IAB donor may exchange the fourth information through an X2 interface or an Xn interface. The fourth information may be carried in an X2AP or XnAP message between the source IAB donor and the target IAB donor. For example, the fourth information may be carried in a handover request response message that is for the IAB node and that is sent by the target IAB donor to the source IAB donor (for the handover request response message for the IAB node, refer to S203). Alternatively, the fourth information may be encapsulated in an F1AP container (container) information element, and then is carried in an X2AP message or an XnAP message.

Optionally, the source IAB donor and the target IAB donor may forward and exchange the fourth information through S1 interfaces or NG interfaces to a core network device. For example, the target IAB donor sends the fourth information to the core network device through the S1 interface or the NG interface. After receiving the fourth information, the core network device forwards the fourth information to the source IAB donor through the S1 interface or the NG interface.

The fourth information includes IP address information of the target IAB donor, and the IP address information is for establishing an initial SCTP association between the target IAB donor and the IAB node. Optionally, the IP address information may be further for establishing a subsequent SCTP association between the target IAB donor and the IAB node. That is, the IP address information may include an IP address for establishing the initial SCTP association, and may further include an IP address for establishing the subsequent SCTP association.

The IP address information includes at least one of the following: an IP address of the target IAB donor for a first F1 interface, an IP address type of the target IAB donor for the first F1 interface, an IP address prefix of the target IAB donor for the first F1 interface, a quantity of IP addresses of the target IAB donor for the first F1 interface, an IP address of the target IAB donor for a first F1-C interface or an F1-C service, an IP address type of the target IAB donor for the first F1-C interface or the F1-C service, an IP address prefix of the target IAB donor for the first F1-C interface or the F1-C service, a quantity of IP addresses of the target IAB donor for the first F1-C interface or the F1 - C service, an IP address of the target IAB donor for a first F1-U interface or an F1-U service, an IP address type of the target IAB donor for the first F1-U interface or the F1-U service, an IP address prefix of the target IAB donor for the first F1-U interface or the F1-U service, and a quantity of IP addresses of the target IAB donors for the first F1-U interface or the F1-U service. The first F1-C interface is a control plane interface of the first F1 interface, the first F1-U interface is a user plane interface of the first F1 interface, the F1-C service includes a service passing through the first F1-C interface, and the F1-U service includes a service passing through the first F1-U interface. The IP address type may include an IPv4 type and/or an IPv6 type.

The IP address of the target IAB donor for the first F1 interface includes an IP address of a CU corresponding to the first F1 interface, for example, an IP address of a donor-CU. The IP address of the target IAB donor for the first F1-C interface or the F1-C service includes an IP address of a CU corresponding to the first F1-C interface, for example, an IP address of a donor-CU-CP. The IP address of the target IAB donor for the first F1-U interface or the F1-U service includes an IP address of a CU corresponding to the first F1-U interface, for example, an IP address of a donor-CU-UP.

Optionally, the target IAB donor may send the fourth information to the source IAB donor at a request of the IAB node. For example, the IAB node sends IP address request information to the source IAB donor, where the IP address request information is for requesting an IP address from the target IAB donor. The source IAB donor forwards the IP address request information to the target IAB donor. Alternatively, the target IAB donor may send the fourth information to the source IAB donor based on a handover request message that is for the IAB node and that is from the source IAB donor (for the handover request message for the IAB node, refer to S202).

S402. The source IAB donor sends fifth information to the IAB node.

After receiving the fourth information, the source IAB donor sends the fifth information to the IAB node, where the fifth information includes the IP address information. Specifically, when the IAB node is connected to the source IAB donor through the source parent node, the source IAB donor may send the fifth information to the IAB node through the source parent node of the IAB node.

For example, the source IAB donor may include the IP address information in an RRC reconfiguration message sent by the source IAB donor to the IAB node (for the RRC reconfiguration message, refer to S204). After receiving the IP address information, an MT of the IAB node may send the IP address information to a DU of the IAB node through an internal interface.

Optionally, the source IAB donor may include the IP address information in an F1AP message, on a second F1 interface, sent by the source IAB donor to the IAB node. The second F1 interface is a communication interface between a DU of the IAB node and the CU of the source IAB donor. For example, after the fourth information is encapsulated in an F1AP container (container) information element, when the fourth information is carried in an X2AP message or an XnAP message and sent by the target IAB donor to the source IAB donor, the source IAB donor may transparently transmit the fourth information as the fifth information to the IAB node.

S403. The IAB node establishes the initial SCTP association with the target IAB donor.

Specifically, the initial SCTP association may be established between the IAB node and the CU of the target IAB donor. The IAB node uses an IP address to establish the initial SCTP association with the target IAB donor. The IP address is obtained based on the IP address information in the fifth information in S402.

Further, an IP address for the subsequent SCTP association may also be obtained based on the IP address information in the fifth information in S402. Alternatively, an IP address for the subsequent SCTP association is obtained based on GNB-CU CONFIGURATION UPDATE information sent by the target IAB donor (or the target donor CU) to the IAB node after the first F1 interface is successfully established.

This embodiment of this application provides a fast SCTP association establishment method. The target IAB donor sends the IP address information of the target IAB donor to the IAB node, so that the IAB node can quickly establish the SCTP association with the target IAB donor based on the IP address information. This further improves a success rate of establishing the SCTP association between the target IAB donor and the IAB node.

Based on a technical concept similar to the foregoing technical concept, an embodiment of this application provides a communication device. The communication device may be the relay device, the network device, or the user equipment in the communication method and any possible design of the communication method provided in any one of the foregoing embodiments. The relay device, the network device, or the user equipment may include at least one corresponding unit configured to perform a method step, an operation, or behavior performed by the relay device, the network device, or the user equipment in the communication method provided in any one of the foregoing embodiments. The at least one unit may be disposed in a one-to-one correspondence with the method step, the operation, or the behavior performed by the relay device, the network device, or the user equipment.

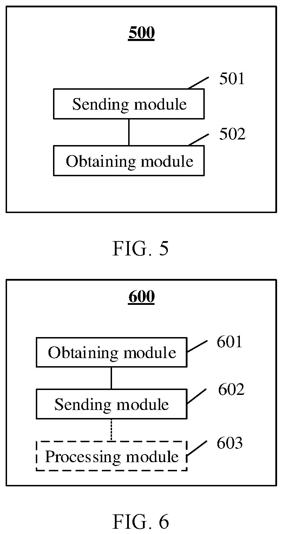

FIG. 5 is a schematic block diagram of a communication apparatus 500 according to an embodiment of this application. The following specifically describes a structure and a function of the communication apparatus 500 with reference to FIG. 5. The communication apparatus 500 may include a sending module 501 and an obtaining module 502.

In an example of this application, the communication apparatus 500 may be applied to a source IAB donor. The sending module 501 is specifically configured to send first information to a target IAB donor of an IAB node, where the first information includes request information for setting up a first F1 interface. The obtaining module 502 is specifically configured to obtain second information from the target IAB donor, where the second information includes feedback information of the request information. The first F1 interface is a communication interface between a DU of the IAB node and a CU of the target IAB donor.

The request information for setting up the first F1 interface may include at least one of the following information: an IAB-DU identifier (ID), an IAB-DU name (name), served cell information of a cell served by the IAB node (served cell information of a cell served by the IAB node), a system information configuration (for example, a synchronization signal and PBCH block (synchronization signal and physical broadcast channel block, SSB) related configuration) sent by the DU of the IAB node, an RRC version supported by the DU of the IAB node, and transport layer address information of the DU of the IAB node. The SSB related configuration may include an SSB frequency, an SSB period, an SSB carrier spacing, an SSB offset (Offset), SSB duration (Duration), or the like.

When the feedback information is response information for setting up the first F1 interface, the sending module 501 may be further configured to send third information to the IAB node, where the third information includes the response information.

The response information for setting up the first F1 interface includes at least one of the following: information for identifying the target IAB donor, activation information of the cell served by the IAB node, an RRC version supported by the CU of the target IAB donor, transport layer address information of the CU of the target IAB donor, and a synchronization signal block transmission configuration (synchronization signal block transmission configuration, STC) of the DU of the IAB node. The activation information of the cell served by the IAB node may include information about one or more cells that need to be activated. The information for identifying the target IAB donor may include any one of the following: an identifier (ID) or a name (name) of the target IAB donor, a CU identifier (ID) or name (name) of the target IAB donor, or a base station identifier (gNB ID) or name (name) of the target IAB donor.

When the feedback information is indication information indicating that setup of the first F1 interface fails, the sending module 501 may further continue to send the first information to the target IAB donor of the IAB node.

Optionally, the obtaining module 502 may be further configured to receive fourth information from the target IAB donor, where the fourth information includes IP address information of the target IAB donor, and the IP address information is for establishing an initial SCTP association between the target IAB donor and the IAB node. Further, the sending module 501 may be further configured to send fifth information to the IAB node, where the fifth information includes the IP address information.

The IP address information includes at least one of the following: an IP address of the target IAB donor for the first F1 interface, an IP address type of the target IAB donor for the first F1 interface, an IP address prefix of the target IAB donor for the first F1 interface, a quantity of IP addresses of the target IAB donor for the first F1 interface, an IP address of the target IAB donor for a first F1 -C interface or an F1-C service, an IP address type of the target IAB donor for the first F1-C interface or the F1-C service, an IP address prefix of the target IAB donor for the first F1-C interface or the F1-C service, a quantity of IP addresses of the target IAB donor for the first F1-C interface or the F1-C service, an IP address of the target IAB donor for a first F1-U interface or an F1-U service, an IP address type of the target IAB donor for the first F1-U interface or the F1-U service, an IP address prefix of the target IAB donor for the first F1-U interface or the F1-U service, and a quantity of IP addresses of the target IAB donors for the first F1-U interface or the F1-U service. The first F1-C interface is a control plane interface of the first F1 interface, the first F1-U interface is a user plane interface of the first F1 interface, the F1-C service includes a service passing through the first F1-C interface, and the F1-U service includes a service passing through the first F1-U interface. The IP address type may include an IPv4 type and/or an IPv6 type.

Optionally, the obtaining module 502 may be further configured to receive sixth information from the target IAB donor, where the sixth information includes request information for setting up a context of a subordinate device of the IAB node in the IAB node and/or the target IAB donor. Further, the sending module 501 may be further configured to send seventh information to the IAB node, where the seventh information includes the request information. Further, the obtaining module 502 may be further configured to receive response information from the IAB node for setting up the context of the subordinate device of the IAB node in the IAB node and/or the target IAB donor. The subordinate device of the IAB node includes a child IAB node of the IAB node or a terminal device accessing the IAB node. Further, the sending module 501 may be further configured to send the response information to the target IAB donor.

The request information for setting up the context of the subordinate device of the IAB node in the IAB node and/or the target IAB donor includes at least one of the following: an F1 application protocol identifier corresponding to the subordinate device of the IAB node, a setup list of SCells served by the IAB node, a setup list of SRBs between the IAB node and the subordinate device of the IAB node, a setup list of DRBs between the IAB node and the subordinate device of the IAB node, a setup list of BH RLC CHs between the IAB node and the subordinate device of the IAB node (or a child node of the IAB node), a user plane data routing rule of the IAB node, and a user plane bearer mapping rule of the IAB node. The response information for setting up the context of the subordinate device of the IAB node in the IAB node and/or the target IAB donor includes at least one of the following: a C-RNTI allocated by the IAB node to the subordinate device of the IAB node, a list of DRBs between the IAB node and the subordinate device of the IAB node that are successfully or unsuccessfully set up, and a list of SRBs between the IAB node and the subordinate device of the IAB node that are successfully or unsuccessfully set up, a list of BH RLC CHs between the IAB node and the subordinate device of the IAB node that are successfully or unsuccessfully set up, and a list of SCells served by the IAB node that are successfully or unsuccessfully set up.

FIG. 6 is a schematic block diagram of a communication apparatus 600 according to an embodiment of this application. The following specifically describes a structure and a function of the communication apparatus 600 with reference to FIG. 6. The communication apparatus 600 may include an obtaining module 601 and a sending module 602, and optionally, may further include a processing module 603.

In an example of this application, the communication apparatus 600 may be applied to a target IAB donor. The obtaining module 601 is specifically configured to receive first information from a source IAB donor, where the first information includes request information for setting up a first F1 interface. The first F1 interface is a communication interface between a distributed unit of an IAB node and a central unit of the target IAB donor.

The sending module 602 is specifically configured to send second information to the source IAB donor, where the second information includes feedback information of the request information.

The request information for setting up the first F1 interface may include at least one of the following information: an IAB-DU identifier (ID), an IAB-DU name (name), served cell information of a cell served by the IAB node (served cell information of a cell served by the IAB node), a system information configuration (for example, a synchronization signal and PBCH block (synchronization signal and physical broadcast channel block, SSB) related configuration) sent by the DU of the IAB node, an RRC version supported by the DU of the IAB node, and transport layer address information of the DU of the IAB node. The SSB related configuration may include an SSB frequency, an SSB period, an SSB carrier spacing, an SSB offset (Offset), SSB duration (Duration), or the like. Response information for setting up the first F1 interface includes at least one of the following: information for identifying the target IAB donor, activation information of the cell served by the IAB node, an RRC version supported by the CU of the target IAB donor, transport layer address information of the CU of the target IAB donor, and a synchronization signal block transmission configuration (synchronization signal block transmission configuration, STC) of the DU of the IAB node. The activation information of the cell served by the IAB node may include information about one or more cells that need to be activated. The information for identifying the target IAB donor may include any one of the following: an identifier (ID) or a name (name) of the target IAB donor, a CU identifier (ID) or name (name) of the target IAB donor, or a base station identifier (gNB ID) or name (name) of the target IAB donor.

Optionally, the sending module 602 may be further configured to send fourth information to the source IAB donor, where the fourth information includes IP address information of the target IAB donor, and the IP address information is for establishing an initial SCTP association between the target IAB donor and the IAB node.

The IP address information includes at least one of the following: an IP address of the target IAB donor for the first F1 interface, an IP address type of the target IAB donor for the first F1 interface, an IP address prefix of the target IAB donor for the first F1 interface, a quantity of IP addresses of the target IAB donor for the first F1 interface, an IP address of the target IAB donor for a first F1-C interface or an F1-C service, an IP address type of the target IAB donor for the first F1-C interface or the F1-C service, an IP address prefix of the target IAB donor for the first F1-C interface or the F1-C service, a quantity of IP addresses of the target IAB donor for the first F1-C interface or the F1-C service, an IP address of the target IAB donor for a first F1-U interface or an F1-U service, an IP address type of the target IAB donor for the first F1-U interface or the F1-U service, an IP address prefix of the target IAB donor for the first F1-U interface or the F1-U service, and a quantity of IP addresses of the target IAB donors for the first F1-U interface or the F1-U service. The first F1-C interface is a control plane interface of the first F1 interface, the first F1-U interface is a user plane interface of the first F1 interface, the F1-C service includes a service passing through the first F1-C interface, and the F1-U service includes a service passing through the first F1-U interface. The IP address type may include an IPv4 type and/or an IPv6 type.

Optionally, the sending module 602 may be further configured to send sixth information to the source IAB donor, where the sixth information includes request information for setting up a context of a subordinate device of the IAB node in the IAB node and/or the target IAB donor. Further, the obtaining module 601 may be further configured to receive, from the source IAB donor, response information from the IAB node for setting up the context of the subordinate device of the IAB node in the IAB node and/or the target IAB donor.

The request information for setting up the context of the subordinate device of the IAB node in the IAB node and/or the target IAB donor includes at least one of the following: an F1 application protocol identifier corresponding to the subordinate device of the IAB node, a setup list of SCells served by the IAB node, a setup list of SRBs between the IAB node and the subordinate device of the IAB node, a setup list of DRBs between the IAB node and the subordinate device of the IAB node, a setup list of BH RLC CHs between the IAB node and the subordinate device of the IAB node (or a child node of the IAB node), a user plane data routing rule of the IAB node, and a user plane bearer mapping rule of the IAB node. The response information for setting up the context of the subordinate device of the IAB node in the IAB node and/or the target IAB donor includes at least one of the following: a C-RNTI allocated by the IAB node to the subordinate device of the IAB node, a list of DRBs between the IAB node and the subordinate device of the IAB node that are successfully or unsuccessfully set up, and a list of SRBs between the IAB node and the subordinate device of the IAB node that are successfully or unsuccessfully set up, a list of BH RLC CHs between the IAB node and the subordinate device of the IAB node that are successfully or unsuccessfully set up, and a list of SCells served by the IAB node that are successfully or unsuccessfully set up.

Optionally, the communication apparatus 600 may further include the processing module 603. The processing module 603 is specifically configured to establish the initial SCTP association with the IAB node based on an IP address. The IP address is an IP address included in the IP address information carried in the fourth information.

In another example of this application, the communication apparatus 600 may be applied to an IAB node. The obtaining module 601 is specifically configured to receive third information from a source IAB donor, where the third information includes response information for setting up a first F1 interface. The first F1 interface is a communication interface between a distributed unit of the IAB node and a central unit of a target IAB donor.

When the response information for setting up the first F1 interface is carried in an F1AP message that is on a second F1 interface (a communication interface between a DU of the IAB node and a CU of the source IAB donor) and that is sent by the source IAB donor (or the source donor CU) to the IAB node (or the IAB-DU), the F1AP message on the second F1 interface may include indication information, where the indication information indicates that information included in the F1AP message on the second F1 interface is information corresponding to the target IAB donor or information for setting up the first F1 interface. In this case, the processing module 603 may determine, based on the indication information included in the F1AP message on the second F1 interface obtained by the obtaining module 601, that the information included in the F1AP message on the second F1 interface is the information corresponding to the target IAB donor or the information for setting up the first F1 interface.

Optionally, the obtaining module 601 may be further configured to obtain fifth information from the source IAB donor, where the fifth information includes IP address information.

The IP address information includes at least one of the following: an IP address of the target IAB donor for the first F1 interface, an IP address type of the target IAB donor for the first F1 interface, an IP address prefix of the target IAB donor for the first F1 interface, a quantity of IP addresses of the target IAB donor for the first F1 interface, an IP address of the target IAB donor for a first F1-C interface or an F1-C service, an IP address type of the target IAB donor for the first F1-C interface or the F1-C service, an IP address prefix of the target IAB donor for the first F1-C interface or the F1-C service, a quantity of IP addresses of the target IAB donor for the first F1-C interface or the F1-C service, an IP address of the target IAB donor for a first F1-U interface or an F1-U service, an IP address type of the target IAB donor for the first F1-U interface or the F1-U service, an IP address prefix of the target IAB donor for the first F1-U interface or the F1-U service, and a quantity of IP addresses of the target IAB donors for the first F1-U interface or the F1-U service. The first F1-C interface is a control plane interface of the first F1 interface, the first F1-U interface is a user plane interface of the first F1 interface, the F1-C service includes a service passing through the first F1-C interface, and the F1-U service includes a service passing through the first F1-U interface. The IP address type may include an IPv4 type and/or an IPv6 type.

Optionally, the obtaining module 601 may be further configured to obtain seventh information from the source IAB donor, where the seventh information includes request information for setting up a context of a subordinate device of the IAB node in the IAB node and/or the target IAB donor.

The request information for setting up the context of the subordinate device of the IAB node in the IAB node and/or the target IAB donor includes at least one of the following: an F1 application protocol identifier corresponding to the subordinate device of the IAB node, a setup list of SCells served by the IAB node, a setup list of SRBs between the IAB node and the subordinate device of the IAB node, a setup list of DRBs between the IAB node and the subordinate device of the IAB node, a setup list of BH RLC CHs between the IAB node and the subordinate device of the IAB node (or a child node of the IAB node), a user plane data routing rule of the IAB node, and a user plane bearer mapping rule of the IAB node.

Further, the sending module 602 is further configured to send feedback information of the seventh information to the source IAB donor, where the feedback information of the seventh information is response information for setting up the context of the subordinate device of the IAB node in the IAB node and/or the target IAB donor.

The response information for setting up the context of the subordinate device of the IAB node in the IAB node and/or the target IAB donor includes at least one of the following: a C-RNTI allocated by the IAB node to the subordinate device of the IAB node, a list of DRBs between the IAB node and the subordinate device of the IAB node that are successfully or unsuccessfully set up, and a list of SRBs between the IAB node and the subordinate device of the IAB node that are successfully or unsuccessfully set up, a list of BH RLC CHs between the IAB node and the subordinate device of the IAB node that are successfully or unsuccessfully set up, and a list of SCells served by the IAB node that are successfully or unsuccessfully set up.

Optionally, the communication apparatus 600 may further include the processing module 603. The processing module 603 is specifically configured to establish an initial SCTP association with the target IAB donor based on an IP address. The IP address is obtained by the communication apparatus 600 based on the fifth information.

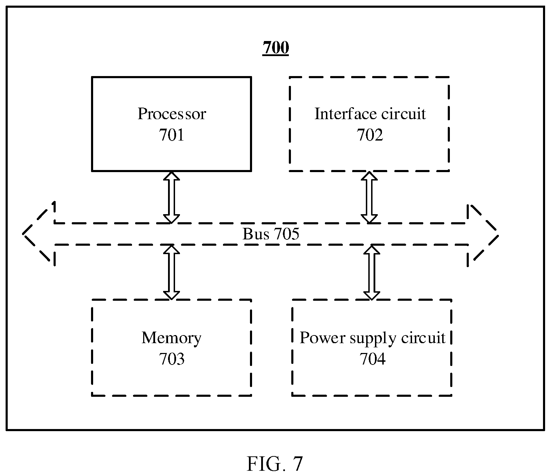

Based on a same technical concept, an embodiment of this application further provides an apparatus 700. The following specifically describes a structure and a function of the apparatus 700 with reference to a schematic block diagram, namely, FIG. 7, of the apparatus 700. The apparatus may include at least one processor 701, and optionally, further includes an interface circuit 702. When related program instructions are executed in the at least one processor 701, the apparatus 700 may be enabled to implement the communication method provided in any one of the foregoing embodiments and the possible designs thereof. Alternatively, the processor 701 is configured to implement, by using a logic circuit or executing code instructions, the communication method provided in any one of the foregoing embodiments and the possible designs thereof. The interface circuit 702 may be configured to receive the program instructions and transmit the program instructions to the processor. Alternatively, the interface circuit 702 may be used by the apparatus 700 to communicate and interact with another communication device, for example, exchange control signaling and/or service data with another communication device. For example, the interface circuit 702 may be configured to: receive a signal from another apparatus different from the apparatus 700, and transmit the signal to the processor 701; or send a signal from the processor 701 to another communication apparatus different from the apparatus 700. The interface circuit 702 may be a code and/or data read and write interface circuit, or the interface circuit 702 may be a signal transmission interface circuit between a communication processor and a transceiver. Optionally, the communication apparatus 700 may further include at least one memory 703, and the memory 703 may be configured to store the related program instructions and/or data that are/is required. Optionally, the apparatus 700 may further include a power supply circuit 704. The power supply circuit 704 may be configured to supply power to the processor 701. The power supply circuit 704 may be located in a same chip as the processor 701, or may be located in another chip different from a chip in which the processor 701 is located. Optionally, the apparatus 700 may further include a bus 705, and parts in the apparatus 700 may be interconnected through the bus 705.

It should be understood that the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor or the processor may be any conventional processor or the like.

It should be further understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of a random access memory (RAM) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The power supply circuit in embodiments of this application includes but is not limited to at least one of the following: a power supply line, a power supply subsystem, a power management chip, a power consumption management processor, or a power consumption management control circuit.

The transceiver apparatus, the interface circuit, or the transceiver in embodiments of this application may include a separate transmitter and/or a separate receiver, or the transmitter and the receiver may be integrated. The transceiver apparatus, the interface circuit, or the transceiver may work under an indication of a corresponding processor. Optionally, the transmitter may correspond to a transmitter machine in a physical device, and the receiver may correspond to a receiver machine in the physical device.

It may be clearly understood by a person skilled in the art that, for the purpose of convenient and brief description, division of the foregoing functional modules is used as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, refer to a corresponding process in the foregoing method embodiments, and details are not described herein again.

In embodiments of this application, it should be understood that the disclosed systems, apparatuses, and methods may be implemented in other manners. For example, the described apparatus embodiments are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

A person of ordinary skill in the art may be aware that, in combination with examples described in embodiments disclosed in this specification, units or algorithm operations may be implemented by hardware, software, or a combination of software and hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In this application, "implemented by software" may mean that a processor reads and executes program instructions stored in a memory to implement a function corresponding to the foregoing module or unit. The processor is a processing circuit that has a function of executing the program instructions, and includes but is not limited to at least one of the following: types of processing circuits that can execute the program instructions such as a central processing unit (central processing unit, CPU), a microprocessor, a digital signal processor (digital signal processor, DSP), a microcontroller (microcontroller unit, MCU), or an artificial intelligence processor. In some other embodiments, the processor may further include a circuit that has another processing function (for example, a hardware circuit, a bus, and an interface circuit that are used for hardware acceleration). The processor may be presented in a form of an integrated chip. For example, the processor may be presented in a form of an integrated chip whose processing function includes only a function of executing software instructions; or the processor may be presented in a form of a system-on-a chip (system-on-a chip, SoC). To be specific, on one chip, in addition to the processing circuit (which is usually referred to as a "core") that can execute the program instructions, another hardware circuit configured to implement a specific function is further included (where certainly, the hardware circuit may also be independently implemented based on an ASIC or an FPGA). Correspondingly, in addition to the function of executing software instructions, processing functions may further include various hardware acceleration functions (such as AI computing, encoding and decoding, and compression and decompression).

In this application, "implemented by hardware" means that a function of the foregoing module or unit is implemented through a hardware processing circuit that does not have a function of processing program instructions. The hardware processing circuit may include a discrete hardware component, or may be an integrated circuit. To reduce power consumption and a size, an integrated circuit is usually used for implementation. The hardware processing circuit may include an ASIC, or a programmable logic device (programmable logic device, PLD). The PLD may further include an FPGA, a complex programmable logic device (complex programmable logic device, CPLD), or the like. These hardware processing circuits may be an independently packaged semiconductor chip (for example, packaged into an ASIC), or may be integrated with another circuit (such as a CPU or a DSP) and then packaged into a semiconductor chip. For example, a plurality of hardware circuits and CPUs may be formed on one silicon base, and are independently packaged into a chip, where the chip is also referred to as a SoC; or a circuit that is configured to implement an FPGA function and a CPU may be formed on a silicon base, and are independently packaged into a chip, where the chip is also referred to as a system-on-a-programmable-chip (system-on-a-programmable-chip, SoPC).

It should be noted that, when this application is implemented by using software, hardware, or a combination of software and hardware, this application may be implemented by using different software and hardware, which is not limited to only one type of software or hardware. For example, one of the modules or units may be implemented through the CPU, and another module or unit may be implemented through the DSP. Similarly, when hardware is used for implementation, one of the modules or units may be implemented through the ASIC, and another module or unit may be implemented through the FPGA. Certainly, it is also not specified that some or all modules or units are implemented by using a same type of software (for example, through the CPU) or a same type of hardware (for example, through the ASIC). In addition, a person skilled in the art may know that, software generally has better flexibility but poorer performance than hardware, and hardware is exactly opposite. Therefore, a person skilled in the art may select software, hardware, or a combination thereof for implementation based on an actual requirement.

In the foregoing embodiments, the description of each embodiment has respective focuses. For a part that is not described in detail in an embodiment, refer to related descriptions in other embodiments. Embodiments of this application may be combined, or some technical features in embodiments may be decoupled from specific embodiments and combined with a conventional technology, to resolve the technical problem in embodiments of this application.

In embodiments of this application, the units described as separate components may or may not be physically separate, and components displayed as units may or may not be physical units, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and may include several instructions for instructing a computer device, for example, a personal computer, a server, or a network device, or a processor (processor) to perform all or a part of the operations of the methods described in embodiments of this application. The foregoing storage medium may include any medium or computer-readable storage medium that can store program code, such as a USB flash drive, a removable hard disk, a read-only memory (read-only memory, ROM), a random access memory (random access memory, RAM), a magnetic disk, or an optical disc.

In descriptions of this application, terms such as "first", "second", "S201", or "S202" are merely used for distinguishing and description and for ease of organizing this article. Different sequences or numbers do not have specific technical meanings, and cannot be understood as indicating or implying relative importance, or indicating or implying an execution sequence of operations.

The term "and/or" in this application describes only an association relationship for associated objects, and indicates that three relationships may exist. For example, "A and/or B" may indicate the following three cases: Only A exists; both A and B exist; or only B exists. A and B may be singular or plural. In addition, the character "/" in this specification indicates an "or" relationship between the associated objects.

In this application, "transmission" may include the following three cases: data sending, data receiving, or data sending and data receiving. In this application, the "data" may include service data and/or signaling data.

In this application, the terms "include", "contain" and any other variants thereof are intended to cover the non-exclusive inclusion. For example, a process/method that includes a series of steps or a system/product/device that includes a series of units is not necessarily limited to those expressly listed steps or units, but may include other steps or units not expressly listed or inherent to these processes/methods/products/devices.

In the descriptions of this application, "at least one" represents one or more. "At least one of the following: A, B, and C is included" may indicate that A is included, B is included, C is included, A and B are included, A and C are included, B and C are included, or A, B and C are included.

The solutions provided in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) mobile communication system, a new radio (new radio, NR) system, or another network system that can be used to provide a mobile communication service. This is not limited in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, applied to a source integrated access and backhaul IAB donor of an IAB node, and comprising:
sending first information to a target IAB donor of the IAB node, wherein the first information comprises request information for setting up a first F1 interface; and
receiving second information from the target IAB donor, wherein the second information comprises feedback information of the request information; and
the first F1 interface is a communication interface between a distributed unit DU of the IAB node and a central unit CU of the target IAB donor.

2. The method according to claim 1, wherein the feedback information is response information for setting up the first F1 interface, and the method further comprises:
sending third information to the IAB node, wherein the third information comprises the response information for setting up the first F1 interface.

3. The method according to claim 1 or 2, wherein the request information for setting up the first F1 interface comprises at least one of the following: a DU identifier of the IAB node, a DU name of the IAB node, served cell information of a cell served by the IAB node, system information sent by the DU of the IAB node, a radio resource control RRC version supported by the DU of the IAB node, and transport layer address information of the DU of the IAB node.

4. The method according to claim 2 or 3, wherein the response information for setting up the first F1 interface comprises at least one of the following: information for identifying the target IAB donor, activation information of the cell served by the IAB node, an RRC version supported by the CU of the target IAB donor, transport layer address information of the CU of the target IAB donor, and a synchronization signal block transmission configuration STC of the DU of the IAB node.

5. The method according to any one of claims 1 to 4, wherein the first information is carried in a handover request message that is for the IAB node and that is sent by the source IAB donor to the target IAB donor.

6. The method according to any one of claims 1 to 5, wherein the second information is carried in a handover request response message that is for the IAB node and that is sent by the target IAB donor to the source IAB donor.

7. The method according to any one of claims 2 to 6, wherein the third information is carried in a radio resource control RRC reconfiguration message sent by the source IAB donor to the IAB node; or
the third information is carried in an F1 application protocol F1AP message, on a second F1 interface, sent by the source IAB donor to the IAB node, wherein the second F1 interface is a communication interface between the DU of the IAB node and a CU of the source IAB donor.

8. The method according to claim 7, wherein when the third information is carried in the F1AP message on the second F1 interface, the F1AP message on the second F1 interface further comprises indication information, wherein the indication information indicates that the third information corresponds to the target IAB donor.

9. The method according to any one of claims 1 to 8, wherein the method further comprises:
receiving fourth information from the target IAB donor, wherein the fourth information comprises IP address information of the target IAB donor, and the IP address information is for establishing an initial stream control transmission protocol SCTP association between the target IAB donor and the IAB node; and
sending fifth information to the IAB node, wherein the fifth information comprises the IP address information.

10. The method according to claim 9, wherein the fourth information is carried in a handover request response message that is for the IAB node and that is sent by the target IAB donor to the source IAB donor.

11. The method according to claim 9 or 10, wherein the fifth information is carried in a radio resource control RRC reconfiguration message sent by the source IAB donor to the IAB node.

12. The method according to any one of claims 1 to 11, wherein the method further comprises:
receiving sixth information from the target IAB donor, wherein the sixth information comprises request information for setting up a context of a subordinate device of the IAB node in the IAB node and/or the target IAB donor;
sending seventh information to the IAB node, wherein the seventh information comprises the request information for setting up the context of the subordinate device of the IAB node in the IAB node and/or the target IAB donor;
receiving, from the IAB node, response information for setting up the context of the subordinate device of the IAB node in the IAB node and/or the target IAB donor; and
sending, to the target IAB donor, the response information for setting up the context of the subordinate device of the IAB node in the IAB node and/or the target IAB donor, wherein
the subordinate device of the IAB node comprises a child IAB node of the IAB node or a terminal device accessing the IAB node.

13. The method according to claim 12, wherein the seventh information is carried in a radio resource control RRC reconfiguration message sent by the source IAB donor to the IAB node, or the seventh information and the third information are carried in a same message.

14. The method according to claim 12 or 13, wherein the receiving sixth information from the target IAB donor comprises:
receiving the sixth information from the target IAB donor through a core network device; and
the sending, to the target IAB donor, the response information for setting up the context of the subordinate device of the IAB node in the IAB node and/or the target IAB donor comprises:
sending, to the target IAB donor through the core network device, the response information for setting up the context of the subordinate device of the IAB node in the IAB node and/or the target IAB donor.

15. The method according to any one of claims 9 to 14, wherein the receiving fourth information from the target IAB donor comprises:
receiving the fourth information from the target IAB donor through the core network device.

16. The method according to any one of claims 1 to 15, wherein the sending first information to a target IAB donor of the IAB node comprises:
sending the first information to the target IAB donor of the IAB node through the core network device; and
the receiving second information from the target IAB donor comprises:
receiving the second information from the target IAB donor through the core network device.

17. A communication method, applied to a target integrated access and backhaul IAB donor of an IAB node, and comprising:
receiving first information from a source IAB donor of the IAB node, wherein the first information comprises request information for setting up a first F1 interface; and
sending second information to the source IAB donor, wherein the second information comprises feedback information of the request information; and
the first F1 interface is a communication interface between a distributed unit DU of the IAB node and a central unit CU of the target IAB donor.

18. The method according to claim 17, wherein the method further comprises:
sending IP address information of the first F1 interface to the IAB node through the source IAB donor, wherein the IP address information of the first F1 interface is for establishing an initial stream control transmission protocol SCTP association between the target IAB donor and the IAB node.

19. The method according to claim 17 or 18, wherein the method further comprises:
sending, to the IAB node through the source IAB donor, request information for setting up a context of a subordinate device of the IAB node in the IAB node and/or the target IAB donor; and
receiving, from the IAB node through the source IAB donor, response information for setting up the context of the subordinate device of the IAB node in the IAB node and/or the target IAB donor, wherein
the subordinate device of the IAB node comprises a child IAB node of the IAB node or a terminal device accessing the IAB node.

20. The method according to claim 19, wherein the sending, to the IAB node through the source IAB donor, request information for setting up a context of a subordinate device of the IAB node in the IAB node and/or the target IAB donor comprises:
sending, to the IAB node through a core network device and the source IAB donor, the request information for setting up the context of the subordinate device of the IAB node in the IAB node and/or the target IAB donor; and
the receiving, from the IAB node through the source IAB donor, response information for setting up the context of the subordinate device of the IAB node in the IAB node and/or the target IAB donor comprises:
receiving, from the IAB node through the core network device and the source IAB donor, the response information for setting up the context of the subordinate device of the IAB node in the IAB node and/or the target IAB donor.

21. The method according to any one of claims 17 to 20, wherein the sending IP address information of the first F1 interface to the IAB node through the source IAB donor comprises:
sending the IP address information of the first F1 interface to the IAB node through the core network device and the source IAB donor.

22. The method according to any one of claims 17 to 21, wherein the receiving first information from a source IAB donor of the IAB node comprises:
receiving the first information from the source IAB donor of the IAB node through the core network device; and
the sending second information to the source IAB donor comprises:
sending the second information to the source IAB donor of the IAB node through the core network device.

23. A communication method, applied to an integrated access and backhaul IAB node, and comprising:
receiving third information from a source IAB donor, wherein the third information comprises response information for setting up a first F1 interface, wherein
the first F1 interface is a communication interface between a distributed unit DU of the IAB node and a central unit CU of a target IAB donor.

24. The method according to claim 23, wherein the method further comprises:
receiving fifth information from the source IAB donor, wherein the fifth information comprises IP address information of the first F1 interface, and the IP address information of the first F1 interface is for establishing an initial stream control transmission protocol SCTP association between the target IAB donor and the IAB node.

25. The method according to claim 24 or 25, wherein the method further comprises:
receiving seventh information from the source IAB donor, wherein the seventh information comprises request information for setting up a context of a subordinate device of the IAB node in the IAB node and/or the target IAB donor; and
sending, to the target IAB donor through the source IAB donor, response information for setting up the context of the subordinate device of the IAB node in the IAB node and/or the target IAB donor, wherein
the subordinate device of the IAB node comprises a child IAB node of the IAB node or a terminal device accessing the IAB node.

26. A communication method, applied to an integrated access and backhaul IAB node, and comprising:
receiving IP address information of a target IAB donor from the target IAB donor, wherein the IP address information is for establishing an initial stream control transmission protocol SCTP association between the target IAB donor and the IAB node; and
establishing the initial SCTP association between the target IAB donor and the IAB node based on the IP address information of the target IAB donor.

27. The method according to claim 26, wherein the IP address information comprises at least one of the following: an Internet Protocol IP address, an IP address type, an IP address prefix, or a quantity of IP addresses of the target IAB donor for a first F1 interface, an IP address, an IP address type, an IP address prefix, or a quantity of IP addresses of the target IAB donor for a first F1-C interface or an F1-C service, and an IP address, an IP address type, an IP address prefix, or a quantity of IP addresses of the target IAB donor for a first F 1-U interface or an F 1-U service, wherein the first F1 interface is a communication interface between a DU of the IAB node and a CU of the target IAB donor, the first F1-C interface is a control plane interface of the first F1 interface, the first F1-U interface is a user plane interface of the first F1 interface, the F1-C service comprises a service passing through the first F1-C interface, and the F1-U service comprises a service passing through the first F1-U interface.

28. The method according to claim 26 or 27, wherein the IP address information of the target IAB donor is carried in a handover request response message that is for the IAB node and that is sent by the target IAB donor to the source IAB donor.

29. The method according to any one of claims 26 to 28, wherein the IP address information of the target IAB donor is carried in an RRC reconfiguration message sent by the source IAB donor to the IAB node.

30. A communication method, applied to a target integrated access and backhaul IAB donor, and comprising:
sending IP address information of the target IAB donor to an IAB node, wherein the IP address information is for establishing an initial stream control transmission protocol SCTP association between the target IAB donor and the IAB node; and
establishing the initial SCTP association between the target IAB donor and the IAB node based on the IP address information of the target IAB donor.

31. The method according to claim 30, wherein the sending IP address information of the target IAB donor to an IAB node comprises:
sending the IP address information of the target IAB donor to the IAB node through a core network device and a source IAB donor.

32. The method according to claim 30 or 31, wherein the IP address information comprises at least one of the following: an Internet Protocol IP address, an IP address type, an IP address prefix, or a quantity of IP addresses of the target IAB donor for a first F1 interface, an IP address, an IP address type, an IP address prefix, or a quantity of IP addresses of the target IAB donor for a first F1-C interface or an F1-C service, and an IP address, an IP address type, an IP address prefix, or a quantity of IP addresses of the target IAB donor for a first F 1 -U interface or an F1-U service, wherein the first F1 interface is a communication interface between a DU of the IAB node and a CU of the target IAB donor, the first F1-C interface is a control plane interface of the first F1 interface, the first F1-U interface is a user plane interface of the first F1 interface, the F1-C service comprises a service passing through the first F1-C interface, and the F1-U service comprises a service passing through the first F1-U interface.

33. The method according to any one of claims 30 to 32, wherein the IP address information of the target IAB donor is carried in a handover request response message that is for the IAB node and that is sent by the target IAB donor to the source IAB donor.

34. The method according to any one of claims 30 to 33, wherein the IP address information of the target IAB donor is carried in an RRC reconfiguration message sent by the source IAB donor to the IAB node.

35. A communication apparatus, comprising:
a sending module, configured to send first information to a target IAB donor of an IAB node, wherein the first information comprises request information for setting up a first F1 interface; and
an obtaining module, configured to receive second information from the target IAB donor, wherein the second information comprises feedback information of the request information, wherein
the first F1 interface is a communication interface between a distributed unit DU of the IAB node and a central unit CU of the target IAB donor.

36. The apparatus according to claim 35, wherein the feedback information is response information for setting up the first F1 interface, and the sending module is further configured to send third information to the IAB node, wherein the third information comprises the response information for setting up the first F1 interface.

37. The apparatus according to claim 35 or 36, wherein the request information for setting up the first F1 interface comprises at least one of the following: a DU identifier of the IAB node, a DU name of the IAB node, served cell information of a cell served by the IAB node, system information sent by the DU of the IAB node, a radio resource control RRC version supported by the DU of the IAB node, and transport layer address information of the DU of the IAB node.

38. The apparatus according to claim 36 or 37, wherein the response information for setting up the first F1 interface comprises at least one of the following: information for identifying the target IAB donor, activation information of the cell served by the IAB node, an RRC version supported by the CU of the target IAB donor, transport layer address information of the CU of the target IAB donor, and a synchronization signal block transmission configuration STC of the DU of the IAB node.

39. The apparatus according to any one of claims 35 to 38, wherein the first information is carried in a handover request message that is for the IAB node and that is sent by the source IAB donor to the target IAB donor.

40. The apparatus according to any one of claims 35 to 39, wherein the second information is carried in a handover request response message that is for the IAB node and that is sent by the target IAB donor to the source IAB donor.

41. The apparatus according to any one of claims 36 to 40, wherein the third information is carried in a radio resource control RRC reconfiguration message sent by the source IAB donor to the IAB node; or
the third information is carried in an F1 application protocol F1AP message, on a second F1 interface, sent by the source IAB donor to the IAB node, wherein the second F1 interface is a communication interface between the DU of the IAB node and a CU of the source IAB donor.

42. The apparatus according to claim 41, wherein when the third information is carried in the F1AP message on the second F1 interface, the F1AP message on the second F1 interface further comprises indication information, wherein the indication information indicates that the third information corresponds to the target IAB donor.

43. The apparatus according to any one of claims 35 to 42, wherein
the obtaining module is further configured to receive fourth information from the target IAB donor, wherein the fourth information comprises IP address information of the target IAB donor, and the IP address information is for establishing an initial stream control transmission protocol SCTP association between the target IAB donor and the IAB node; and
the sending module is further configured to send fifth information to the IAB node, wherein the fifth information comprises the IP address information.

44. The apparatus according to claim 43, wherein the fourth information is carried in a handover request response message that is for the IAB node and that is sent by the target IAB donor to the source IAB donor.

45. The apparatus according to claim 43 or 44, wherein the fifth information is carried in a radio resource control RRC reconfiguration message sent by the source IAB donor to the IAB node.

46. The apparatus according to any one of claims 35 to 45, wherein
the obtaining module is further configured to receive sixth information from the target IAB donor, wherein the sixth information comprises request information for setting up a context of a subordinate device of the IAB node in the IAB node and/or the target IAB donor;
the sending module is further configured to send seventh information to the IAB node, wherein the seventh information comprises the request information for setting up the context of the subordinate device of the IAB node in the IAB node and/or the target IAB donor;
the obtaining module is further configured to receive, from the IAB node, response information for setting up the context of the subordinate device of the IAB node in the IAB node and/or the target IAB donor; and
the sending module is further configured to send, to the target IAB donor, the response information for setting up the context of the subordinate device of the IAB node in the IAB node and/or the target IAB donor, wherein
the subordinate device of the IAB node comprises a child IAB node of the IAB node or a terminal device accessing the IAB node.

47. The apparatus according to claim 46, wherein the seventh information is carried in a radio resource control RRC reconfiguration message sent by the source IAB donor to the IAB node, or the seventh information and the third information are carried in a same message.

48. The apparatus according to claim 46 or 47, wherein
the obtaining module is specifically configured to receive the sixth information from the target IAB donor through a core network device; and
the sending module is specifically configured to send, to the target IAB donor through the core network device, the response information for setting up the context of the subordinate device of the IAB node in the IAB node and/or the target IAB donor.

49. The apparatus according to any one of claims 43 to 48, wherein
the obtaining module is specifically configured to receive the fourth information from the target IAB donor through the core network device.

50. The apparatus according to any one of claims 35 to 49, wherein
the sending module is specifically configured to send the first information to the target IAB donor of the IAB node through the core network device; and
the obtaining module is specifically configured to receive the second information from the target IAB donor through the core network device.

51. A communication apparatus, comprising:
an obtaining module, configured to receive first information from a source IAB donor of an IAB node, wherein the first information comprises request information for setting up a first F1 interface; and
a sending module, configured to send second information to the source IAB donor, wherein the second information comprises feedback information of the request information, wherein
the first F1 interface is a communication interface between a distributed unit DU of the IAB node and a central unit CU of a target IAB donor.

52. The apparatus according to claim 51, wherein
the sending module is further configured to send IP address information of the first F1 interface to the IAB node through the source IAB donor, wherein the IP address information of the first F1 interface is for establishing an initial stream control transmission protocol SCTP association between the target IAB donor and the IAB node.

53. The apparatus according to claim 51 or 52, wherein
the sending module is further configured to send, to the IAB node through the source IAB donor, request information for setting up a context of a subordinate device of the IAB node in the IAB node and/or the target IAB donor; and
the obtaining module is further configured to receive, from the IAB node through the source IAB donor, response information for setting up the context of the subordinate device of the IAB node in the IAB node and/or the target IAB donor, wherein
the subordinate device of the IAB node comprises a child IAB node of the IAB node or a terminal device accessing the IAB node.

54. The apparatus according to claim 53, wherein
the sending module is specifically configured to send, to the IAB node through a core network device and the source IAB donor, the request information for setting up the context of the subordinate device of the IAB node in the IAB node and/or the target IAB donor; and
the obtaining module is specifically configured to receive, from the IAB node through the core network device and the source IAB donor, the response information for setting up the context of the subordinate device of the IAB node in the IAB node and/or the target IAB donor.

55. The apparatus according to any one of claims 51 to 54, wherein
the sending module is specifically configured to send the IP address information of the first F1 interface to the IAB node through the core network device and the source IAB donor.

56. The apparatus according to any one of claims 51 to 55, wherein
the obtaining module is specifically configured to receive the first information from the source IAB donor of the IAB node through the core network device; and
the sending module is specifically configured to send the second information to the source IAB donor of the IAB node through the core network device.

57. A communication apparatus, comprising:
an obtaining module, configured to receive third information from a source IAB donor, wherein the third information comprises response information for setting up a first F1 interface, wherein
the first F1 interface is a communication interface between a distributed unit DU of the IAB node and a central unit CU of a target IAB donor.

58. The apparatus according to claim 57, wherein
the obtaining module is further configured to receive fifth information from the source IAB donor, wherein the fifth information comprises IP address information of the first F1 interface, and the IP address information of the first F1 interface is for establishing an initial stream control transmission protocol SCTP association between the target IAB donor and the IAB node.

59. The apparatus according to claim 58 or 59, wherein
the obtaining module is further configured to receive seventh information from the source IAB donor, wherein the seventh information comprises request information for setting up a context of a subordinate device of the IAB node in the IAB node and/or the target IAB donor; and
a sending module, configured to send, to the target IAB donor through the source IAB donor, response information for setting up the context of the subordinate device of the IAB node in the IAB node and/or the target IAB donor, wherein
the subordinate device of the IAB node comprises a child IAB node of the IAB node or a terminal device accessing the IAB node.

60. A communication apparatus, comprising:
an obtaining module, configured to receive IP address information of a target IAB donor from the target IAB donor, wherein the IP address information is for establishing an initial stream control transmission protocol SCTP association between the target IAB donor and the IAB node; and
a processing module, configured to establish the initial SCTP association between the target IAB donor and the IAB node based on the IP address information of the target IAB donor.

61. The apparatus according to claim 60, wherein the IP address information comprises at least one of the following: an Internet Protocol IP address, an IP address type, an IP address prefix, or a quantity of IP addresses of the target IAB donor for a first F1 interface, an IP address, an IP address type, an IP address prefix, or a quantity of IP addresses of the target IAB donor for a first F1-C interface or an F1-C service, and an IP address, an IP address type, an IP address prefix, or a quantity of IP addresses of the target IAB donor for a first F1-U interface or an F1-U service, wherein the first F1 interface is a communication interface between a DU of the IAB node and a CU of the target IAB donor, the first F1-C interface is a control plane interface of the first F1 interface, the first F1-U interface is a user plane interface of the first F1 interface, the F1-C service comprises a service passing through the first F1-C interface, and the F1-U service comprises a service passing through the first F1-U interface.

62. The apparatus according to claim 60 or 61, wherein the IP address information of the target IAB donor is carried in a handover request response message that is for the IAB node and that is sent by the target IAB donor to the source IAB donor.

63. The apparatus according to any one of claims 60 to 62, wherein the IP address information of the target IAB donor is carried in an RRC reconfiguration message sent by the source IAB donor to the IAB node.

64. A communication apparatus, comprising:
a sending module, configured to send IP address information of the target IAB donor to an IAB node, wherein the IP address information is for establishing an initial stream control transmission protocol SCTP association between the target IAB donor and the IAB node; and
a processing module, configured to establish the initial SCTP association between the target IAB donor and the IAB node based on the IP address information of the target IAB donor.

65. The apparatus according to claim 64, wherein
the sending module is specifically configured to send the IP address information of the target IAB donor to the IAB node through a core network device and a source IAB donor.

66. The apparatus according to claim 64 or 65, wherein the IP address information comprises at least one of the following: an Internet Protocol IP address, an IP address type, an IP address prefix, or a quantity of IP addresses of the target IAB donor for a first F1 interface, an IP address, an IP address type, an IP address prefix, or a quantity of IP addresses of the target IAB donor for a first F1-C interface or an F1-C service, and an IP address, an IP address type, an IP address prefix, or a quantity of IP addresses of the target IAB donor for a first F 1-U interface or an F1-U service, wherein the first F1 interface is a communication interface between a DU of the IAB node and a CU of the target IAB donor, the first F1-C interface is a control plane interface of the first F1 interface, the first F1-U interface is a user plane interface of the first F1 interface, the F1-C service comprises a service passing through the first F1-C interface, and the F1-U service comprises a service passing through the first F1-U interface.

67. The apparatus according to any one of claims 64 to 66, wherein the IP address information of the target IAB donor is carried in a handover request response message that is for the IAB node and that is sent by the target IAB donor to the source IAB donor.

68. The apparatus according to any one of claims 64 to 67, wherein the IP address information of the target IAB donor is carried in an RRC reconfiguration message sent by the source IAB donor to the IAB node.

69. A communication apparatus, comprising at least one processor and an interface, wherein the interface is configured to receive and/or send a signal, and the processor is configured to enable the method according to any one of claims 1 to 16 to be performed.

70. A communication apparatus, comprising at least one processor and an interface, wherein the interface is configured to receive and/or send a signal, and the processor is configured to enable the method according to any one of claims 17 to 22 and claims 30 to 34 to be performed.

71. A communication apparatus, comprising at least one processor and an interface, wherein the interface is configured to receive and/or send a signal, and the processor is configured to enable the method according to any one of claims 23 to 29 to be performed.

72. A communication system, comprising the communication apparatus according to claim 26, the communication apparatus according to claim 27, and the communication apparatus according to claim 28.

73. A computer-readable storage medium, wherein the computer-readable storage medium stores computer program instructions; and when the computer program instructions are executed by a processor, the method according to any one of claims 1 to 16 is implemented, the method according to any one of claims 17 to 22 is implemented, or the method according to any one of claims 23 to 25 is implemented.

74. A computer program product, wherein the computer program product comprises computer program instructions; and when the computer program instructions are run by a processor, the method according to any one of claims 1 to 16 is implemented, the method according to any one of claims 17 to 22 is implemented, or the method according to any one of claims 23 to 25 is implemented.
